# EUROPEAN PATENT APPLICATION

(11) **EP 4 664 261 A1**
(43) Date of publication of application: **17.12.2025**
(21) Application number: 24773968.3
(22) Date of filing: 13.03.2024
(51) Int. Cl.: G06F 3/04886

(54) **DISPLAY METHOD AND ELECTRONIC DEVICE**

(30) Priority: 20.03.2023 CN 202310305204
(71) Applicant: Huawei Technologies Co., Ltd., Shenzhen, Guangdong 518129 (CN)
(72) Inventor: MA, Li, Shenzhen, Guangdong 518129 (CN)
(74) Representative: Maiwald GmbH
(86) International application number: PCT/CN2024/081296
(87) International publication number: WO 2024/193402

(57) **Abstract**

This application discloses a display method and an electronic device. A host operating system is installed on the electronic device, and a guest operating system is loaded on the host operating system. The guest operating system uses a virtual keyboard of the host operating system for a user to perform an input operation. When a specific application of the guest operating system enters an input state, the guest operating system sends, to the host operating system, indication information for entering the input state and location information of an input focus. The host operating system brings up and displays the virtual keyboard based on the indication information for entering the input state, and determines, based on the location information of the input focus and height information of the virtual keyboard, whether the input focus is blocked by the virtual keyboard; and if the input focus is blocked by the virtual keyboard, indicates the guest operating system to slide displayed content of the application in a simulated touch sliding manner, so that the input focus is not blocked by the virtual keyboard. In this way, a problem of the virtual keyboard blocking an input area can be effectively resolved, thereby improving user experience.

## Description

This application claims priority to Chinese Patent Application No. 202310305204.5, filed with the China National Intellectual Property Administration on March 20, 2023, and entitled "DISPLAY METHOD AND ELECTRONIC DEVICE", which is incorporated herein by reference in its entirety.

### TECHNICAL FIELD

This application relates to the field of terminal technologies, and in particular, to a display method and an electronic device.

### BACKGROUND

With continuous development of mobile internet technologies, electronic devices (for example, mobile terminal devices such as mobile phones or tablet computers) gradually become an indispensable part of people's life. Currently, many electronic devices use a touchscreen as a human-machine interaction medium. In this case, people usually use a virtual keyboard (which is also referred to as a soft keyboard) to input information on the electronic devices.

However, when an electronic device invokes a virtual keyboard to an operation interface, a problem of the virtual keyboard blocking an input area occurs with a high possibility. Consequently, when performing an input operation, a user cannot see content input by the user, which reduces input efficiency, causes inconvenience, and leads to a poor user experience.

### SUMMARY

Embodiments of this application provide a display method and an electronic device, to resolve a problem of a virtual keyboard blocking an input area, thereby improving user experience.

According to a first aspect, an embodiment of this application provides a display method, applied to an electronic device including a display. A first operating system and a second operating system run on the electronic device. The method includes: The electronic device displays an edit page of a first application, where the first application is run on the first operating system; the electronic device receives an input operation of a user on the edit page; the electronic device displays a virtual keyboard, where the virtual keyboard is provided by the second operating system; and the electronic device slides the edit page until an input focus corresponding to the input operation is not blocked by the virtual keyboard.

With the method provided in the first aspect implemented, after a specific application of a guest operating system (which may also be referred to as the first operating system) enters an input state, the guest operating system sends, to a host operating system (which may also be referred to as the second operating system), indication information for entering the input state and location information of the input focus; and the host operating system brings up and displays the virtual keyboard based on the indication information for entering the input state, and determines, based on the location information of the input focus and height information of the virtual keyboard, whether the input focus is blocked by the virtual keyboard; and if the input focus is blocked by the virtual keyboard, indicates the guest operating system to slide displayed content of the application in a simulated touch sliding manner, so that the input focus is not blocked by the virtual keyboard. In this way, a problem of the virtual keyboard blocking an input area can be effectively resolved, thereby improving user experience.

In a possible implementation, a display area of the virtual keyboard on the display is a first area, and a display location of the input focus on the display before the sliding falls within the first area.

In other words, before sliding the edit page, the electronic device may determine whether the display location of the input focus on the display falls within the display area of the virtual keyboard on the display; and if the display location of the input focus on the display falls within the display area of the virtual keyboard on the display, the electronic device performs the operation of sliding the edit page until the input focus is not blocked by the virtual keyboard.

In a possible implementation, a condition for performing the sliding includes: The edit page is not in a state of being browsed by the user by sliding, and the browsing by sliding means that the user slides the edit page to browse content before or after the input focus.

In this way, when the user actively browses the content on the edit page by sliding, the foregoing sliding operation may not be performed, thereby avoiding a conflict with a user intention.

In a possible implementation, that the electronic device displays the virtual keyboard specifically includes: The first operating system sends a first message to the second operating system based on the input operation; and the second operating system displays the virtual keyboard based on the first message.

In this way, after the specific application of the first operating system enters the input state, the first operating system may send the first message to the second operating system, to indicate the second operating system to bring up and display the virtual keyboard.

In a possible implementation, that the electronic device slides the edit page until the input focus corresponding to the input operation is not blocked by the virtual keyboard specifically includes: The second operating system receives information that is about a first location and that is sent by the first operating system, where the first location is the display location of the input focus on the display before the sliding; the second operating system determines whether the first location falls within the display area of the virtual keyboard on the display; and if the first location falls within the display area of the virtual keyboard on the display, the second operating system sends a second message to the first operating system; and the first operating system slides the edit page based on the second message until the input focus corresponding to the input operation is not blocked by the virtual keyboard.

In this way, when the specific application of the first operating system just enters the input state or in an entire input process of the user, the first operating system may send latest location information of the input focus to the second operating system, so that the second operating system can determine whether the input focus is blocked by the virtual keyboard. If the input focus is blocked by the virtual keyboard, the second operating system may indicate the first operating system to perform the operation of sliding the edit page until the input focus is not blocked by the virtual keyboard.

In a possible implementation, the second message includes a value sequence, and the value sequence is used by the electronic device to slide the edit page until the input focus corresponding to the input operation is not blocked by the virtual keyboard.

The value sequence may be a value sequence corresponding to an operation of simulating touch sliding the edit page by the user. In this way, the electronic device may slide the edit page based on the value sequence.

In a possible implementation, the value sequence sequentially includes at least a first value and a second value, the first value is a distance value between the input focus and a reference boundary of the display before the sliding, and the second value is a distance value between an upper boundary of the virtual keyboard and the reference boundary of the display.

The first value may be a sliding start point value, and the second value may be a sliding end point value. In this way, the electronic device may determine a sliding start point and a sliding end point based on the first value and the second value.

In a possible implementation, the value sequence further includes one or more values between the first value and the second value, and the value sequence is an arithmetic sequence; and/or the reference boundary of the display is an upper boundary of the display; and/or the value sequence further includes one or more values that are the same as the second value after the second value.

One or more values are inserted between the first value and the second value to form an arithmetic sequence, so that the electronic device can present good sliding effect to the user when sliding the edit page based on the value sequence.

Adding one or more values that are the same as the second value after the second value may ensure that the electronic device can accurately slide the input focus to a location of the sliding end point.

In a possible implementation, the method further includes: The second operating system detects a first operation of the user on the virtual keyboard; the second operating system obtains an input object generated by using the first operation, and sends a third message to the first operating system, where the third message includes the input object; and the first operating system displays the input object based on the third message.

In this way, a cross-system input operation can be implemented. For example, the user may perform, by using the virtual keyboard provided by the host operating system, the input operation on the application run on the guest operating system.

In a possible implementation, the method further includes: The first operating system detects a second operation of the user; the first operating system sends a fourth message to the second operating system in response to the second operation; and the second operating system cancels displaying of the virtual keyboard based on the fourth message.

In this way, when the application of the first operating system exits the input state, the first operating system may send the fourth message to the second operating system, to indicate the second operating system to close and cancel displaying of the virtual keyboard.

In the first aspect, the first operating system may be the guest operating system. The second operating system may be the host operating system. The first application may be an application (for example, an office application) run on the guest operating system. The edit page may be a page that is provided by the first application and that is used to implement an edit function. The input operation may be an operation of the user for triggering to enter the input state (for example, a click operation on the edit page by using a mouse or a finger), or may be an input operation of the user by using the virtual keyboard in step S509 in FIG. 5A-1 to FIG. 5A-3. The first message may include the indication information for entering the input state. The second message may be a message 2 or a message 5 in FIG. 5A-1 to FIG. 5A-3. The value sequence may be a simulated touch sliding sequence. The first value may be a start point value of the simulated touch sliding sequence. The second value may be an end point value of the simulated touch sliding sequence. The first operation may be the input operation of the user on the virtual keyboard. The third message may be a message 3 in FIG. 5A-1 to FIG. 5A-3. The second operation may be an operation of the user for triggering to exit the input state. The fourth message may be a message 6 in FIG. 5A-1 to FIG. 5A-3.

According to a second aspect, an embodiment of this application provides an electronic device. The electronic device includes one or more processors and one or more memories. The one or more memories are coupled to the one or more processors, the one or more memories are configured to store computer program code, and the computer program code includes computer instructions; and when the one or more processors execute the computer instructions, the electronic device is enabled to perform the method according to any possible implementation of the first aspect.

According to a third aspect, an embodiment of this application provides a computer storage medium. The computer storage medium stores a computer program, and the computer program includes program instructions; and when the program instructions are run on an electronic device, the electronic device is enabled to perform the method according to any possible implementation of the first aspect.

According to a fourth aspect, an embodiment of this application provides a computer program product. When the computer program product is run on a computer, the computer is enabled to perform the method according to any possible implementation of the first aspect.

### BRIEF DESCRIPTION OF DRAWINGS

FIG. 1 is a diagram of displaying an icon of an application by an electronic device 100 according to an embodiment of this application;
FIG. 2A to FIG. 2D are diagrams of a group of user interfaces in a display method according to an embodiment of this application;
FIG. 3A to FIG. 3C are diagrams of another group of user interfaces in a display method according to an embodiment of this application;
FIG. 4A to FIG. 4D are diagrams of another group of user interfaces in a display method according to an embodiment of this application;
FIG. 5A-1 to FIG. 5A-3 are a schematic flowchart of a display method according to an embodiment of this application;

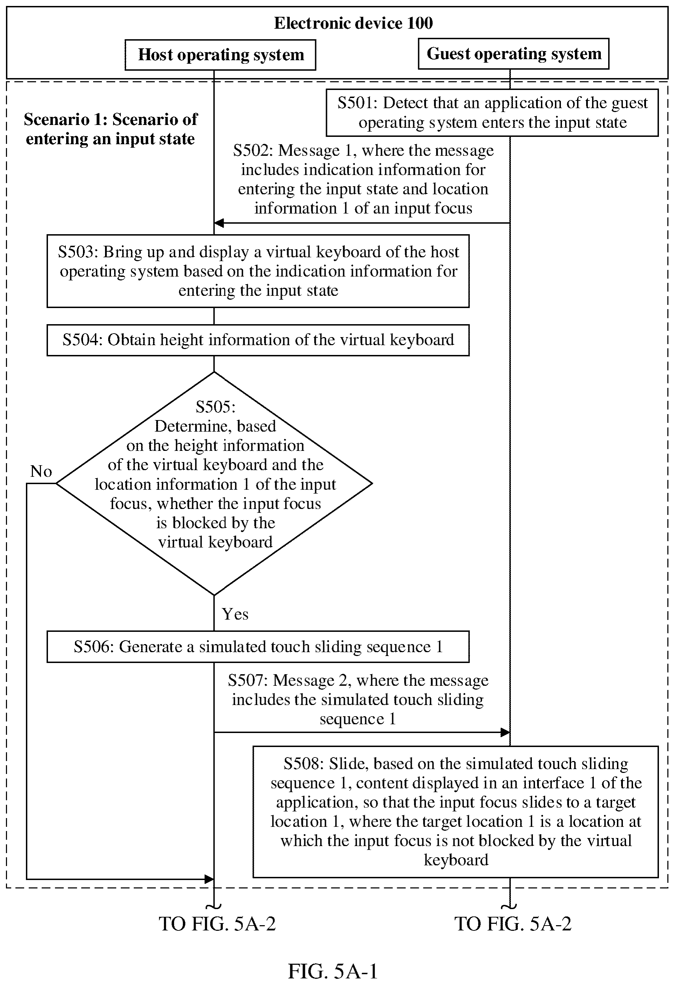

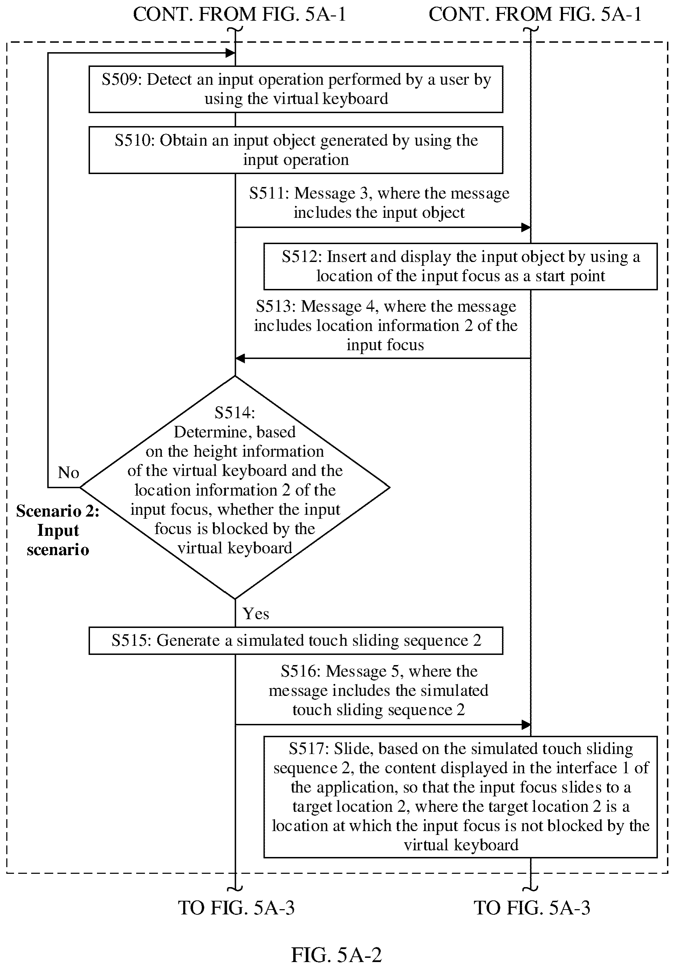

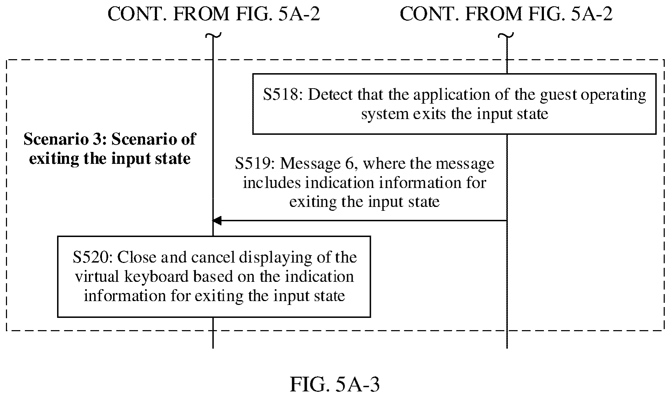

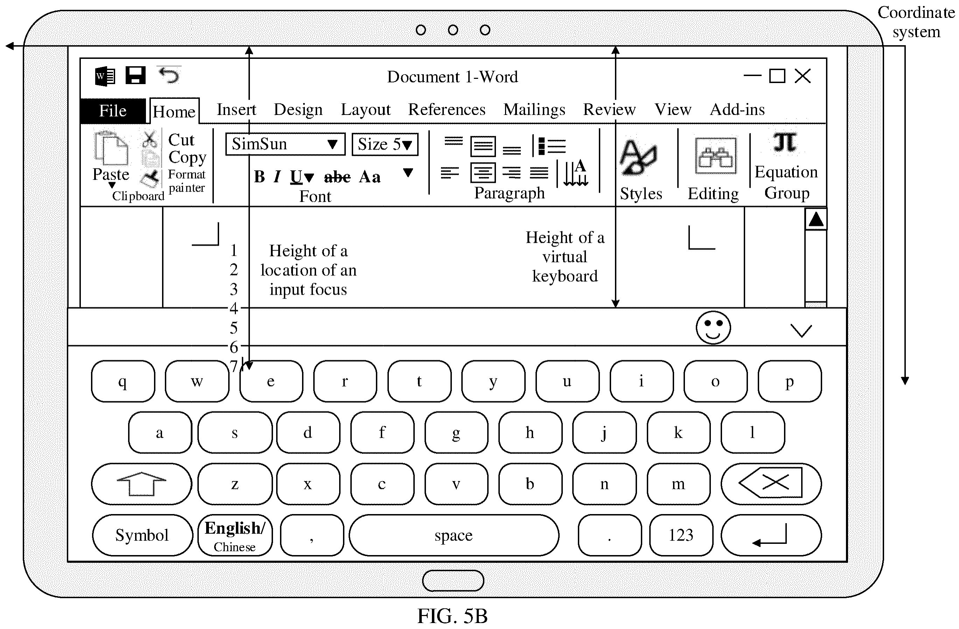

FIG. 5B is a diagram of describing a height of a virtual keyboard and a height of a location of an input focus according to an embodiment of this application;

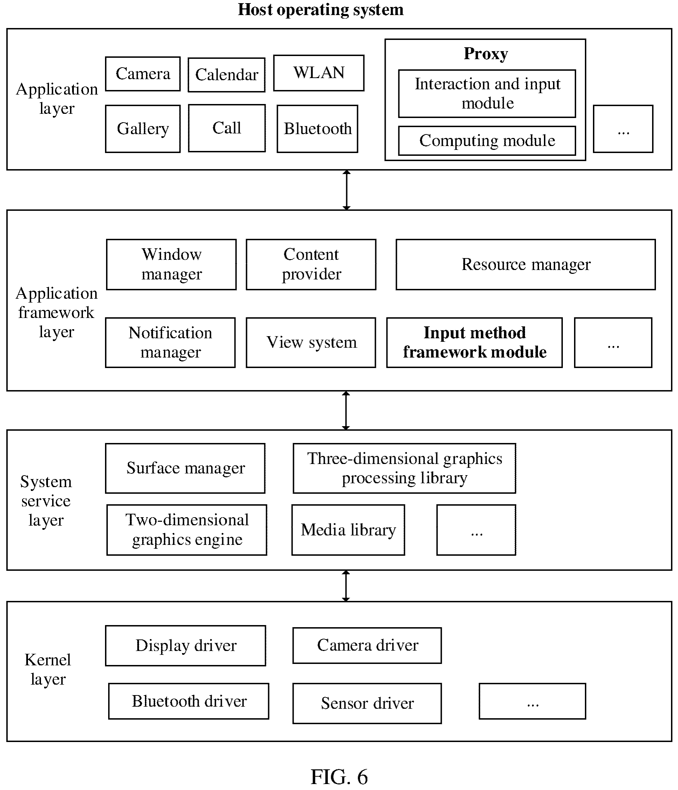

FIG. 6 is a diagram of a software structure of an electronic device 100 according to an embodiment of this application;

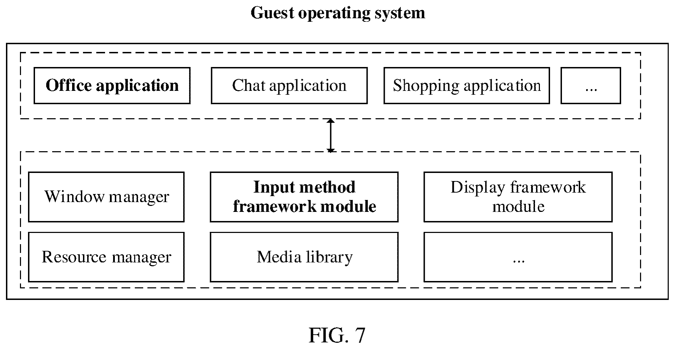

FIG. 7 is a diagram of another software structure of an electronic device 100 according to an embodiment of this application;

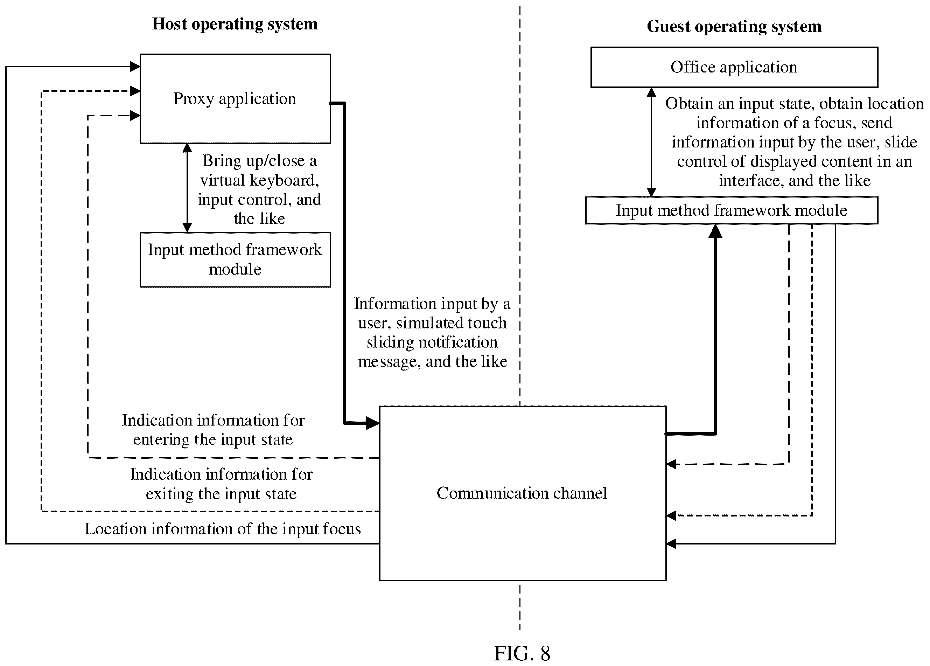

FIG. 8 is a diagram of a possible collaboration manner between modules when a display method provided in embodiments of this application is implemented by an electronic device 100 when a host operating system is installed and a guest operating system is loaded on the host operating system according to an embodiment of this application; and

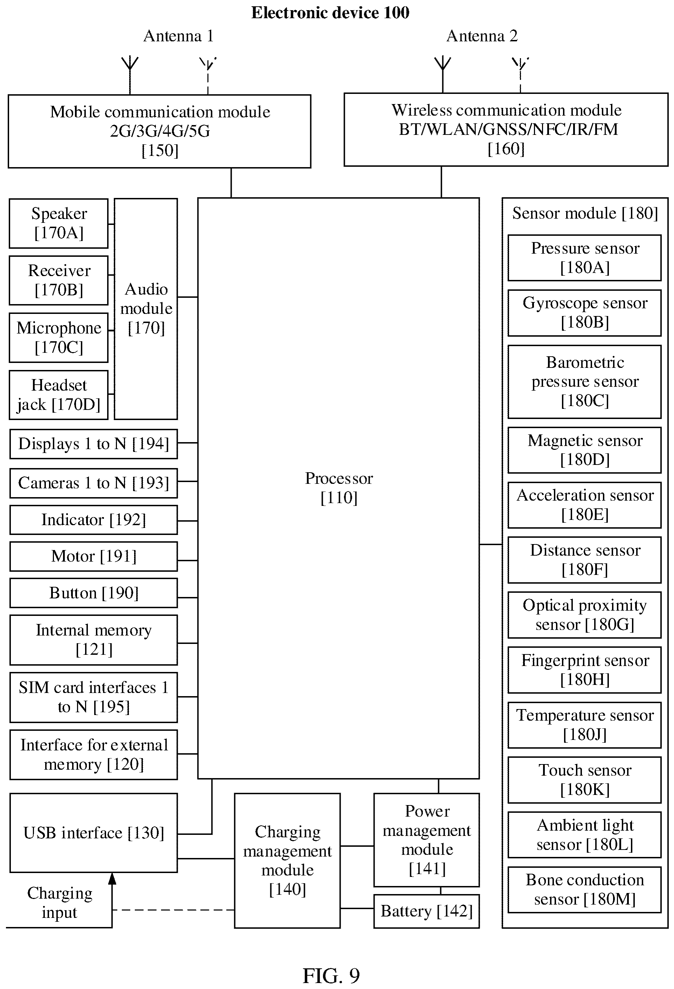

FIG. 9 is a diagram of a structure of an electronic device 100 according to an embodiment of this application.

### DESCRIPTION OF EMBODIMENTS

The following clearly and completely describes technical solutions in embodiments of this application with reference to the accompanying drawings in embodiments of this application. In descriptions of embodiments of this application, "/" indicates or, unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more than two.

It should be understood that the terms "first", "second", and the like in this specification, the claims, and the accompanying drawings of this application are intended to distinguish between different objects, but do not indicate a particular sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this application means that a particular feature, structure, or characteristic described with reference to embodiments may be included in at least one embodiment of this application. The phrase shown in various locations in this specification may not necessarily refer to a same embodiment, and is not an independent or optional embodiment exclusive from another embodiment. It is explicitly and implicitly understood by persons skilled in the art that embodiments described in this application may be combined with another embodiment.

The term "user interface (user interface, UI)" in the following embodiments of this application is a medium interface for interaction and information exchange between an application or an operating system and a user. The user interface implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphic user interface, GUI), and is a user interface that is displayed in a graphical manner and that is related to a computer operation. The user interface may be a visual interface element such as a text, an icon, a button, a menu, a tab, a text box, a dialog box, a status bar, a navigation bar, or a Widget that is displayed on a display of the electronic device.

Currently, mainstream personal computer (Personal Computer, PC) desktop operating systems in the market include Windows^{®}, Linux^{®}, and macOS^{®}, and mainstream mobile operating systems include iOS^{®} and Android^{®}. Because running mechanisms of applications of different operating systems are different from each other and there are barriers in communication and interaction between different operating systems, simple and effective ecological integration cannot be implemented in many aspects. Therefore, usually, an application of an operating system A cannot be installed and run on an operating system B. For example, an application of an Android^{®} operating system cannot be directly installed and run on a Windows^{®} operating system.

With development and maturity of a virtualization (virtualization) technology, if a user needs to run a mobile application on a PC, or run a PC application on a mobile terminal device, the user may implement the mobile application or the PC application by using the virtualization technology.

In the foregoing case, the PC or the mobile terminal device may be referred to as a host machine, and an underlying operating system running on the host machine may be referred to as a host operating system (Host OS). An operating system running on the host machine by using the virtualization technology may be referred to as a guest operating system (Guest OS). In this case, the guest operating system may run on the host machine. The host machine virtualizes a set of virtual hardware environments (including a processor, a memory, an I/O device, and the like) independent of actual hardware, so that for the guest operating system, running in the virtual hardware environment on the host machine is not different from running on the actual hardware. In this way, ecosystems of the PC and the mobile terminal device can be integrated.

Usually, in comparison with the mobile application, the PC application (which may also be referred to as a desktop-level application) can better meet office requirements of the user in terms of function richness, keyboard and mouse adaptation, and the like. With further integration of the PC and the mobile terminal device (for example, a mobile phone or a tablet computer), the PC application may be run on a mobile operating system by using the foregoing virtualization technology. In this way, native experience of the desktop-level application can be implemented on the mobile terminal device, and a more complex office requirement that cannot be implemented by the mobile application is implemented. The office application is used as an example. Desktop-level native experience includes native UI experience, window free-floating, free window scaling, touch interaction, keyboard and mouse interaction, and the like. It is easy to understand that the desktop-level application is run on the mobile terminal device, and a capability of the desktop-level application may be released to a maximum extent on the mobile terminal device by using a touchscreen of the mobile terminal device and external keyboard and mouse peripherals.

When using the mobile terminal device, for example, the tablet computer, the user inevitably encounters a scenario in which the tablet computer is not connected to a physical keyboard. In this case, the user needs to invoke a virtual keyboard of the tablet computer to perform an input operation. However, in a current virtual keyboard technology, experience may be poor sometimes in a single-system or ecological integration cross-system application scenario. For example, when the user invokes the virtual keyboard to an operation interface, or performs the input operation by using the virtual keyboard, a problem of the virtual keyboard blocking an input area occurs with a high possibility, and consequently the user cannot see content input by the user.

To ensure that the user can smoothly perform the input operation without an external physical keyboard, especially in the ecological integration cross-system application scenario, a cross-system virtual keyboard input capability needs to be enabled, so that a user input scenario can be improved, and the user can more flexibly perform the input operation.

Currently, some operating systems resolve the problem of the virtual keyboard blocking the input area in a manner of translating a window upward, adjusting an interface layout, and the like. However, there are also some problems for these manners. For example, for the manner of translating the window upward, if the virtual keyboard blocks a current input box, an interface above the current input box is directly translated upward. As a result, a title bar in the interface is also pushed out of the current layout, the user cannot see the title bar, compromising experience. In addition, when there are a plurality of inputs, an input box under the current input box cannot be input, the virtual keyboard needs to be dismissed to display the input box before inputting. Consequently, operations are complex. For another example, for the manner of adjusting the interface layout, if the virtual keyboard blocks a current input box, the interface layout is adjusted. However, a layout of some interfaces is not adjustable. In this case, the problem of the virtual keyboard blocking the input area cannot be resolved.

In conclusion, it can be learned that for the problem of the virtual keyboard blocking the input area, the current solution is still with many disadvantages. In addition, the current solution is usually based on the single-system application scenario, and there is a lack of a solution in the ecological integration cross-system application scenario.

To resolve the problem of the virtual keyboard blocking the input area when the virtual keyboard is used to perform the input operation in the foregoing ecological integration cross-system application scenario, embodiments of this application provide a display method, applied to an electronic device 100. A host operating system may be installed on the electronic device 100, and a guest operating system may be loaded on the host operating system. The guest operating system may use a virtual keyboard of the host operating system for a user to perform an input operation. When a specific application of the guest operating system enters an input state, the guest operating system may send, to the host operating system, indication information for entering the input state and location information of an input focus. The host operating system may bring up and display the virtual keyboard based on the indication information for entering the input state, and may determine, based on the location information of the input focus and height information of the virtual keyboard, whether the input focus is blocked by the virtual keyboard; and if the input focus is blocked by the virtual keyboard, the host operating system may generate a simulated touch sliding sequence, and send the simulated touch sliding sequence to the guest operating system. The guest operating system may slide, based on the simulated touch sliding sequence, content displayed in an interface of the application in a simulated touch sliding manner, so that the input focus is not blocked by the virtual keyboard, and a problem of the virtual keyboard blocking an input area in an ecological integration cross-system input scenario can be effectively resolved, thereby ensuring that the input focus is not blocked in a process in which the user uses the virtual keyboard to perform the input operation, and improving user experience.

The electronic device 100 in embodiments of this application may be referred to as a host machine. The electronic device 100 may be a mobile device, for example, a tablet computer or a mobile phone. A type of the electronic device 100 is not limited in embodiments of this application. In embodiments of this application, content of embodiments of this application is described by using only an example in which the electronic device 100 is a tablet computer. The host operating system may be installed on the electronic device 100, and the guest operating system may be loaded on the host operating system. The host operating system may include but is not limited to an Android^{®} operating system, an iOS^{®} operating system, and a HarmonyOS^{®} operating system, and the guest operating system may include but is not limited to a Windows^{®} operating system, a Linux^{®} operating system, and a macOS^{®} operating system. A type of the host operating system and a type of the guest operating system are not limited in embodiments of this application.

The display method provided in embodiments of this application may be applied to an ecological integration scenario in which a PC application is run on a mobile terminal device (for example, a tablet computer) by using a virtualization technology. A type of the virtualization technology is not limited in embodiments of this application.

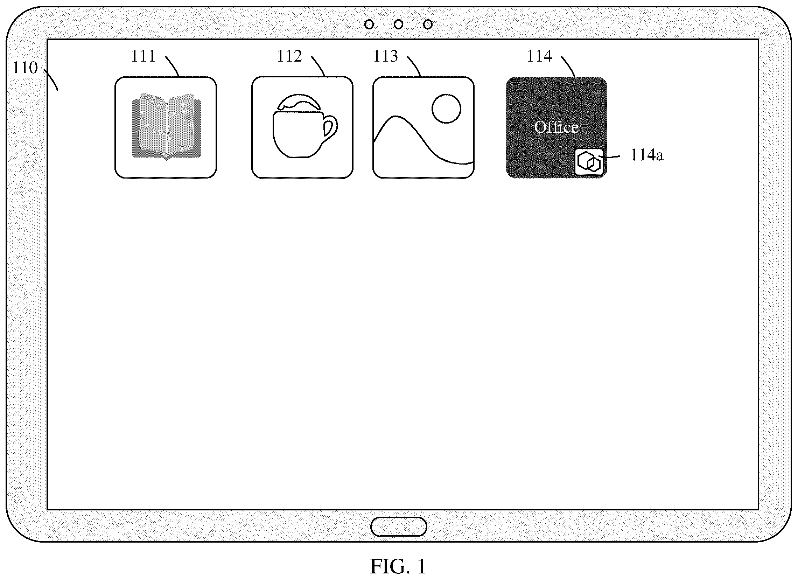

**The following first describes a series of example user interfaces in embodiments of this application with reference to** **FIG. 1****,** **FIG. 2A to FIG. 2D****,** **FIG. 3A to FIG. 3C****, and** **FIG. 4A to FIG. 4D****.**

In embodiments of this application, an example in which the electronic device 100 is a tablet computer is used for description. A host operating system may be installed on the electronic device 100, and a guest operating system may be loaded on the host operating system. An application of the guest operating system is run on the host operating system. The guest operating system may use a virtual keyboard of the host operating system for a user to perform an input operation (that is, the guest operating system may use an input method of the host operating system as an input source).

Refer to FIG. 1. A user interface 110 may be a user interface (which may also be referred to as a desktop) of the host operating system installed on the electronic device 100. The user interface may include icons (for example, an icon 111, an icon 112, an icon 113, and an icon 114) of one or more applications. The icons of the one or more applications may include icons (for example, the icon 111, the icon 112, and the icon 113) of an application of the host operating system, and may also include an icon (for example, the icon 114) of an application of the guest operating system.

Optionally, the icon of the application of the guest operating system may display a related identifier (for example, an identifier 114a) indicating that the application is the application of the guest operating system. In this way, it may be convenient for the user to distinguish whether the icon is the icon of the application of the host operating system or the icon of the application of the guest operating system.

Still refer to FIG. 1. The icon 114 may be an icon of an office application. The application is an application of the guest operating system, and the application may implement a plurality of functions such as document editing.

In embodiments of this application, an example in which the application that uses the virtual keyboard of the host operating system to perform the input operation is the office application of the guest operating system is used.

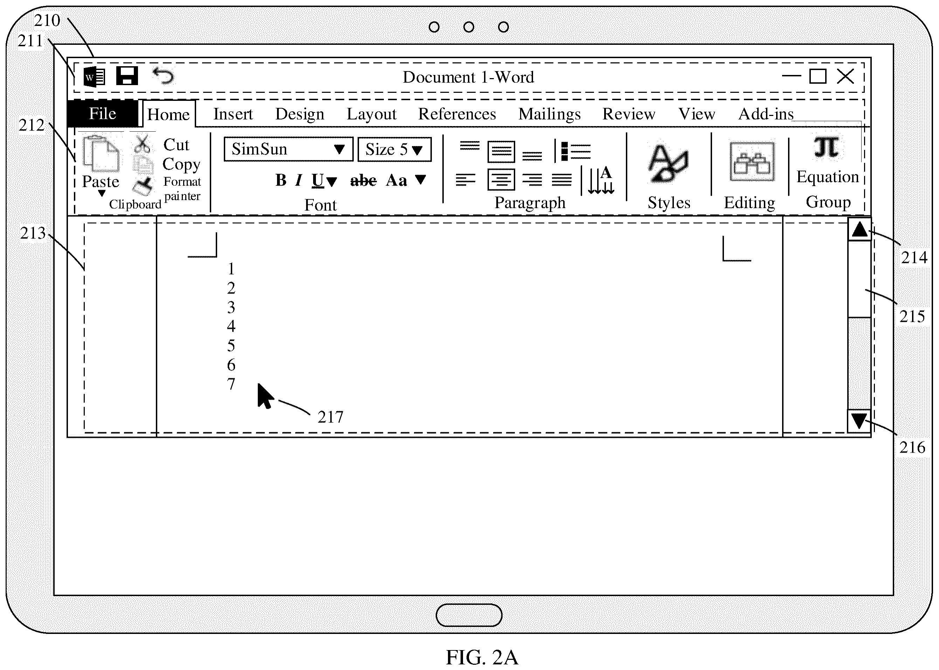

Refer to FIG. 2A. A user interface 210 exemplarily shown in FIG. 2A may be a user interface of a document 1. The document 1 is a document generated by using the office application of the guest operating system. The user may use the virtual keyboard of the host operating system to perform the input operation in the document 1.

Still refer to FIG. 2A. The user interface 210 may include a plurality of display areas (for example, an area 211, an area 212, and an area 213). The area 211 may be used to display information of the document 1, a quick access toolbar, and options corresponding to functions such as minimizing and closing the document 1. The area 212 may be used to display a plurality of function tabs. The area 213 may be used to display content (for example, content "1234567") edited by the user, and is an edit area (which is also referred to as an edit page) of the document. In this area, the user may input content such as a text or a picture. The user interface 210 may further include an option 214, a slider bar 215, and an option 216. The option 214 may be used to slide-down content edited in the document, the slider bar 215 may be used to slide-down/slide-up the content edited in the document, and the option 216 may be used to slide-up the content edited in the document. The user may perform an operation (for example, a click operation) on the option 214/option 216 to slide-down/slide-up the content edited in the document (which may also be referred to as slide-down/slide-up the edit page), or may perform an operation (for example, a drag operation) on the slider bar 215 to slide-down/slide-up the content edited in the document.

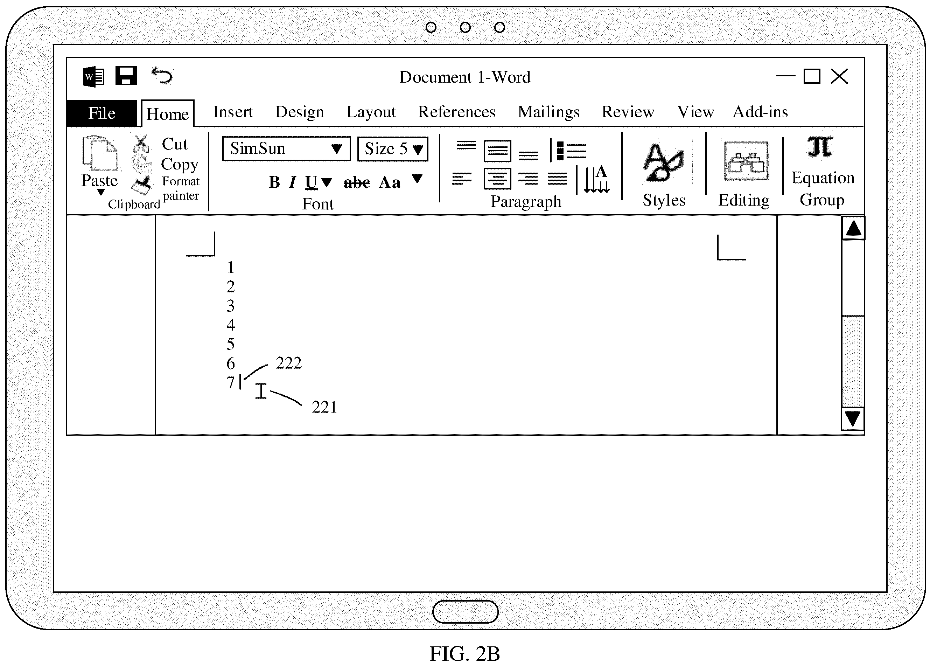

Still refer to FIG. 2A. A cursor 217 may be further displayed in FIG. 2A, and the cursor 217 may be used to display a location of a pointer of an external mouse of the electronic device 100. If the user wants to edit content in the document 1, the electronic device 100 may detect a click operation of the user on a mouse; and in response to the operation, the electronic device 100 may display a cursor 222 exemplarily shown in FIG. 2B as an example. The cursor 222 may indicate that the document 1 is in an input state (that is, the office application enters an input state). The cursor 222 may be a cursor that blinks according to a specific rule, and a location of the cursor 222 is a start point location of the content to be input by the user. The electronic device 100 may further display, through switching, a style (for example, an arrow style) of the cursor 217 exemplarily shown in FIG. 2A to a style (for example, an "I"-shaped style) of the cursor 221 exemplarily shown in FIG. 2B.

It can be learned that in FIG. 2A, the document 1 is not in the input state (that is, the office application has not entered the input state), and the user cannot edit the content in the document 1. The user operation (for example, the click operation on the mouse) is performed, so that the document 1 is switched to the input state exemplarily shown in FIG. 2B, and the user can edit the content in the document 1.

In some examples, after the user opens the document 1, the document 1 may also directly enter the input state exemplarily shown in FIG. 2B, and then enter the input state without performing a manual operation by the user.

In embodiments of this application, "the office application enters the input state" may mean that the cursor 222 exemplarily shown in FIG. 2B is displayed in the document generated by using the office application. Optionally, when the electronic device 100 is externally connected to the mouse, the cursor 221 exemplarily shown in FIG. 2B may also be displayed. "The office application does not enter the input state" may mean that the cursor 222 exemplarily shown in FIG. 2B is not displayed in the document generated by using the office application. Optionally, when the electronic device 100 is externally connected to the mouse, the cursor 217 exemplarily shown in FIG. 2A may be displayed.

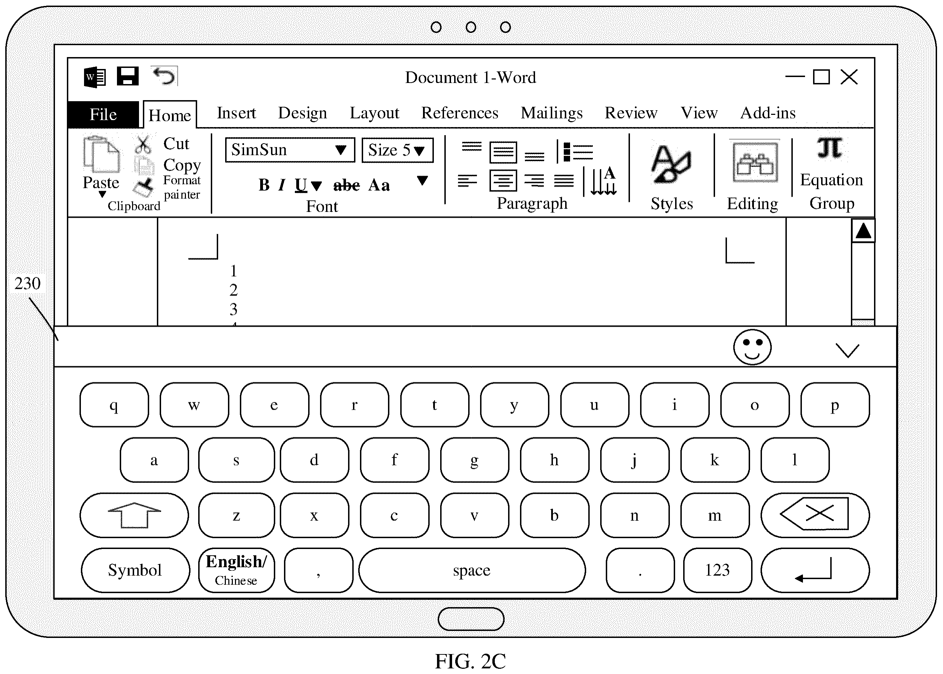

Still refer to FIG. 2B. After detecting that the office application enters the input state, the guest operating system may notify the host operating system, so that the host operating system can invoke the virtual keyboard of the host operating system for the user to perform the input operation. Refer to FIG. 2C. The virtual keyboard 230 exemplarily shown in FIG. 2C is the virtual keyboard invoked by the host operating system. A type of the virtual keyboard is not limited in embodiments of this application, and may be a T9-style Pinyin keyboard, a full QWERTY-style Pinyin keyboard, an English keyboard, a numeric keypad, an emoticon keyboard, a voice keyboard, or the like. It should be noted that in embodiments of this application, the virtual keyboard 230 being the virtual keyboard invoked by the host operating system is used as an example. In some other embodiments of this application, the virtual keyboard 230 may alternatively be a virtual keyboard invoked by the guest operating system.

Still refer to FIG. 2C. It can be learned that the virtual keyboard 230 blocks a part of the displayed content in the document 1, for example, blocks content "4567" and the cursor 222 that are exemplarily shown in FIG. 2B. As a result, when performing the input operation, the user cannot see content input by the user, compromising experience.

In the foregoing case, a problem of the virtual keyboard blocking the input area may be resolved in a manner of performing the manual operation (for example, dragging the slider bar 215 and clicking the option 216) by the user. However, with inputting of the user, the cursor 222 may also be blocked by the virtual keyboard, and the user still needs to perform the manual operation. As a result, in the input process of the user, operations are complex, compromising experience.

With the method provided in embodiments of this application implemented, when the application enters the input state, the electronic device 100 may determine whether the virtual keyboard blocks the input area. If the virtual keyboard blocks the input area, the electronic device 100 may automatically slide the content displayed in the interface in a simulated touch sliding manner, so that the cursor is not blocked by the virtual keyboard, and the user does not need to perform the manual operation, thereby simplifying the user operation, and improving user experience. A specific implementation process of the method provided in embodiments of this application is described in detail in subsequent embodiments. Details are not described herein.

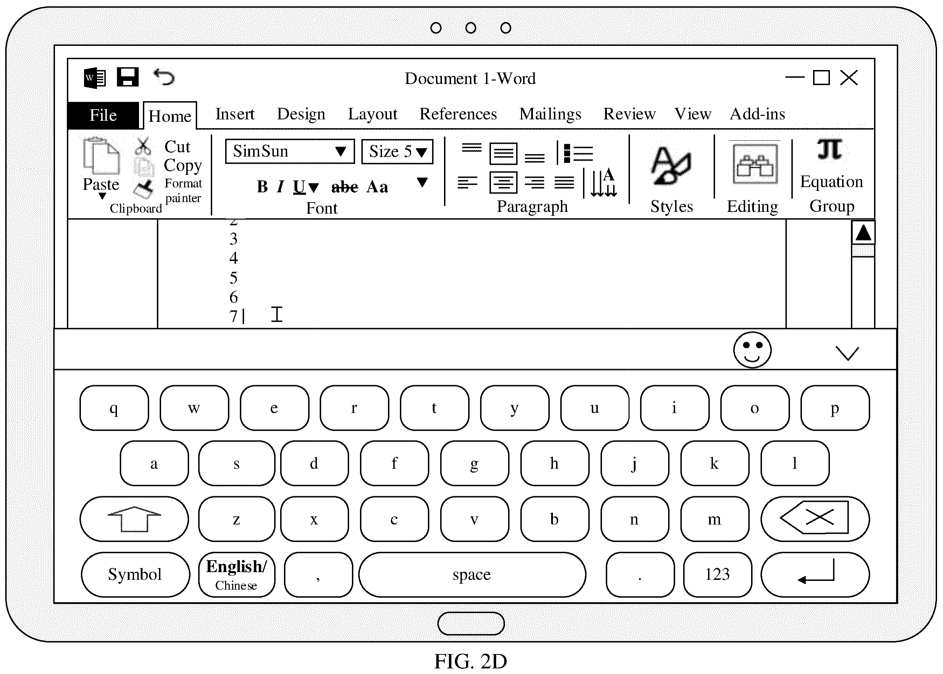

For example, when the application enters the input state exemplarily shown in FIG. 2B, the electronic device 100 may first display a user interface exemplarily shown in FIG. 2C; and after determining that the virtual keyboard 230 blocks the cursor 222 exemplarily shown in FIG. 2B, automatically slide content (for example, content "1234567" and the cursor 222) displayed in the interface in a simulated touch sliding manner, so that the cursor 222 is not blocked by the virtual keyboard 230 (for example, the cursor 222 automatically slides from a location exemplarily shown in FIG. 2B to a location exemplarily shown in FIG. 2D). It can be easily learned that in the sliding process, a display location of the cursor 222 on a display changes, but a location of the cursor 222 relative to the edit page remains unchanged. For example, before sliding, the cursor 222 is at a location 1 of the edit page; and after sliding, the cursor 222 is still at the location 1 of the edit page.

In embodiments of this application, "the virtual keyboard blocks the input area" may mean that a display area in which the virtual keyboard is located (namely, a display area of the virtual keyboard on the display) overlaps the input area (for example, a display area in which the cursor 222 is located) (that is, a display location of an input focus on the display falls within the display area in which the virtual keyboard is located), and a location of the input area is blocked. As a result, a part/all of the input area cannot be displayed on the screen. "The virtual keyboard does not block the input area" may mean that the display area in which the virtual keyboard is located does not overlap the input area (for example, the display area in which the cursor 222 is located) (that is, the display location of the input focus on the display falls outside the display area in which the virtual keyboard is located), the location of the input area is not blocked, and all of the input area may be displayed on the screen.

It can be learned that in the method provided in embodiments of this application, the electronic device 100 resolves the problem of the virtual keyboard blocking the input area by sliding edited content (which does not necessarily include a precise text, a picture, an emoticon, or the like, or may be blank content such as blank content generated by performing a plurality of line break operations) and the cursor that are displayed in the interface, instead of resolving the problem of the virtual keyboard blocking the input area by moving the entire interface or another area (for example, the area 211 and the area 212 exemplarily shown in FIG. 2A) in the interface or adjusting the interface layout. In this way, better experience can be provided for the user. It is easy to understand that the foregoing "resolving the problem of the virtual keyboard blocking the input area by sliding the edited content and the cursor that are displayed in the interface" may mean sliding the edit page (for example, sliding the area 213 exemplarily shown in FIG. 2A) until the cursor is not blocked by the virtual keyboard.

It is easy to understand that during actual application, when the user actively browses content by sliding on the edit page (that is, the user views content before/after a location of the input focus on the edit page), the problem that the input focus is blocked by the virtual keyboard may also occur. In this case, to avoid a conflict with a user intention, the method provided in embodiments of this application may not be performed, that is, the edit page is not automatically slid, so that the cursor is not blocked by the virtual keyboard. It should be noted that the content browsed by sliding does not necessarily include the precise text, the picture, the emoticon, or the like, or may be the blank content (for example, the blank content generated by performing the plurality of line break operations).

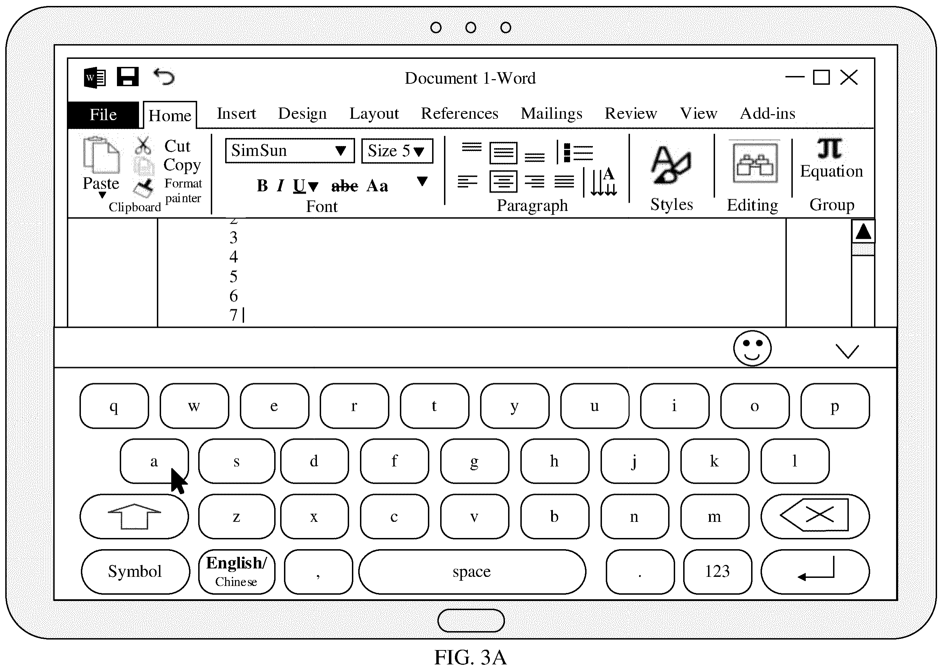

FIG. 2A to FIG. 2D are a group of user interfaces involved in a process in which the electronic device 100 automatically slides the content displayed in the interface of the application to enable the cursor to be not blocked by the virtual keyboard after the application of the guest operating system enters the input state and the application enters the input state. After the foregoing process in which the cursor is not blocked by the virtual keyboard is completed, the application of the guest operating system may perform the input operation (or referred to as an edit operation) by using the virtual keyboard of the host operating system. For a user interface involved in a specific process, refer to a group of user interfaces exemplarily shown in FIG. 3A to FIG. 3C.

Similarly, the document 1 generated by using the office application is used as an example. The user may use the virtual keyboard of the host operating system to perform the input operation in the document 1.

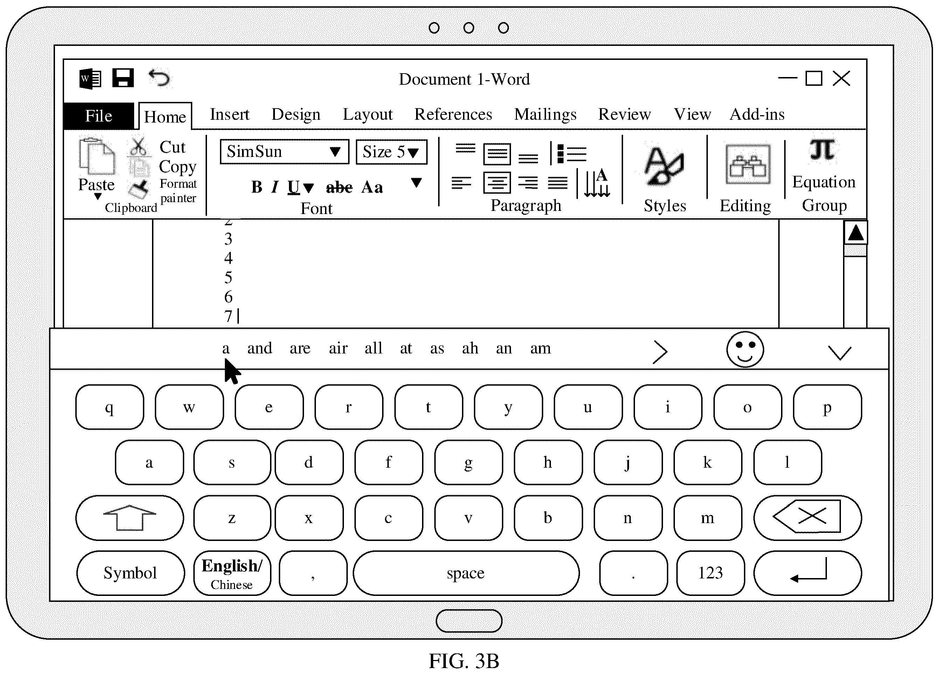

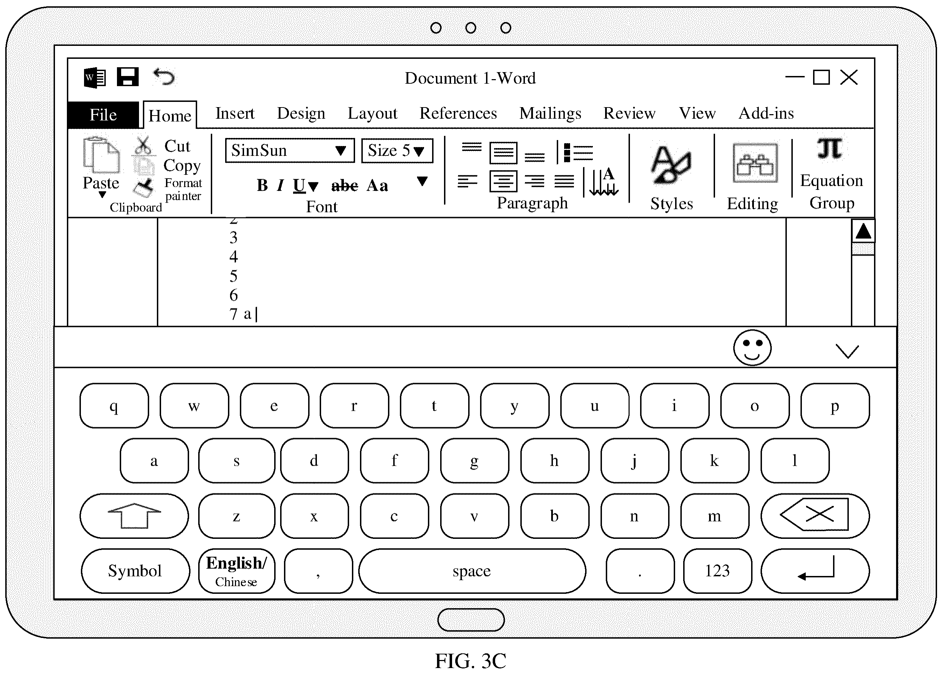

Refer to FIG. 3A. The user may complete information inputting in the document 1 by performing an operation (for example, a click operation) on a virtual button on the virtual keyboard. For example, the electronic device 100 may detect an operation of the user on a specific virtual button (for example, a virtual button "a" exemplarily shown in FIG. 3A) on the virtual keyboard. In response to the operation, the electronic device 100 may display an input object (for example, a character "a" corresponding to the virtual button "a") and a candidate object (for example, a candidate text such as "and" or "are") that are exemplarily shown in FIG. 3B for the user to select. Further, the electronic device 100 may detect an operation (for example, a click operation) of the user on the input object or the candidate object. In response to the operation, the electronic device 100 may insert and display, by using the location of the cursor exemplarily shown in FIG. 3A as a start point, the input object or the candidate object selected by the user. For example, if the user selects the character "a", the electronic device 100 inserts the character "a" by using the location of the cursor exemplarily shown in FIG. 3A as the start point, and the character "a" is displayed in FIG. 3C. At the same time, the location of the cursor also changes once accordingly (for example, moves to a location following the character "a" exemplarily shown in FIG. 3C). In this way, one time of information inputting is completed.

In some examples, after the user clicks a specific virtual button on the virtual keyboard, the electronic device 100 may not display the user interface exemplarily shown in FIG. 3B, but directly inserts a character corresponding to the button and displays the character. For example, after the user clicks the virtual button "a" exemplarily shown in FIG. 3A, the electronic device 100 may directly display the user interface shown in FIG. 3C, that is, insert the character "a" by using the location of the cursor exemplarily shown in FIG. 3A as the start point, and display the character "a" in FIG. 3C, to complete information inputting.

In embodiments of this application, the electronic device 100 may not only determine whether the virtual keyboard blocks the input area when the application enters the input state, but also continuously determine whether the virtual keyboard blocks the input area in the input process. Because with inputting of the user, the location of the cursor also changes, the problem of the virtual keyboard blocking the input area may also accordingly occur again. Therefore, to avoid the problem of the virtual keyboard blocking the input area again, in the input process, the electronic device 100 also continuously determines, based on a latest location of the cursor, whether the virtual keyboard blocks the input area. If the virtual keyboard blocks the input area, the electronic device 100 may continue to automatically slide the content displayed in the interface in a simulated touch sliding manner, so that the cursor is not blocked by the virtual keyboard, and the user does not need to perform the manual operation, thereby simplifying the user operation, and improving user experience.

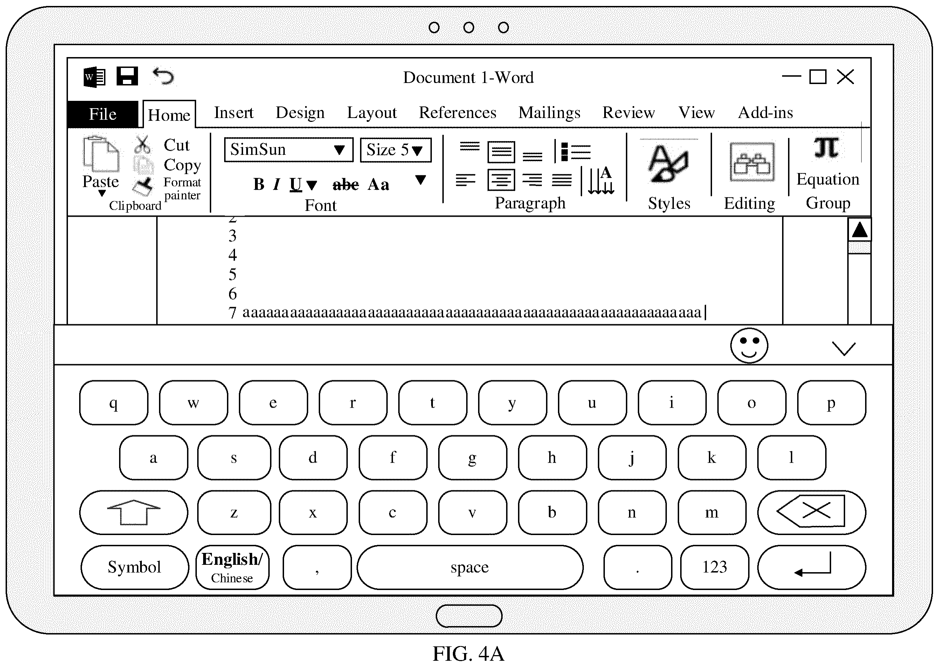

FIG. 4A to FIG. 4D are a group of user interfaces involved in a possible case in which the virtual keyboard blocks the input area in the input process of the user and in resolving, by the electronic device 100, the problem of the virtual keyboard blocking the input area according to an embodiment of this application.

Similarly, the document 1 generated by using the office application is used as an example. The user may use the virtual keyboard of the host operating system to perform the input operation in the document 1.

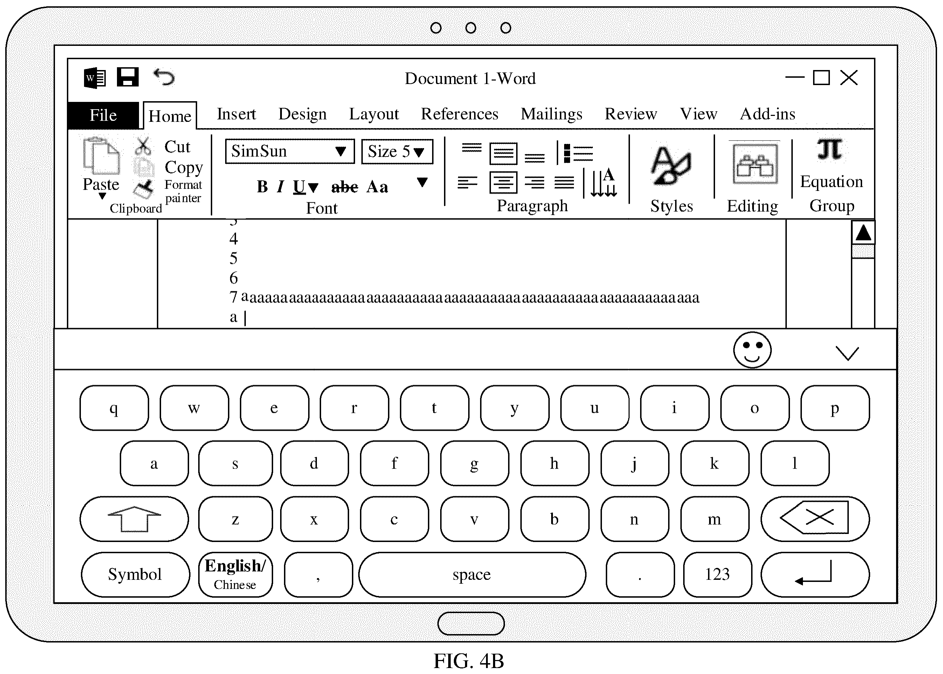

Refer to FIG. 4A. The user may continuously perform the input operation in the document 1, and the cursor also continuously moves until the cursor moves to a location shown in FIG. 4A. Assuming that the location of the cursor shown in FIG. 4A is an end location of the line, if the user continues to perform the input operation, the electronic device 100 displays information newly input by the user in a line break manner. It can be learned from FIG. 4A that because the location of the cursor is exactly at a location that is not blocked by the virtual keyboard. If there is a line break, the cursor moves to a next line of the current line, and consequently the cursor is blocked by the virtual keyboard. In this case, the electronic device 100 may determine, based on a latest location of the cursor, whether the virtual keyboard blocks the input area. Therefore, if the user continues to perform the input operation in FIG. 4A, the electronic device 100 determines that the virtual keyboard blocks the input area. Further, the electronic device 100 may automatically slide the content displayed in the interface in a simulated touch sliding manner, so that the cursor is not blocked by the virtual keyboard, for example, slide to a location shown in FIG. 4B.

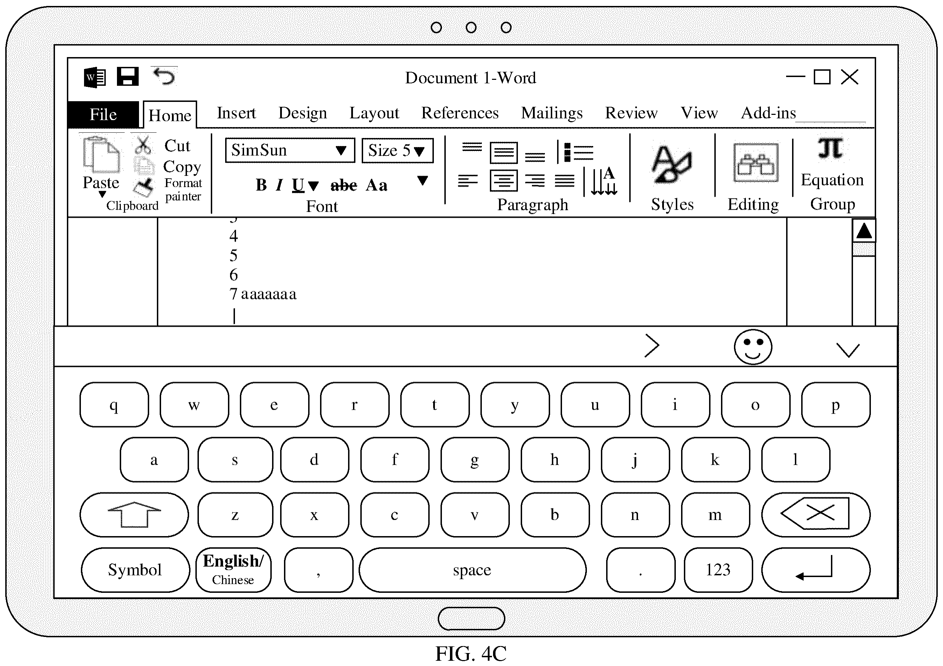

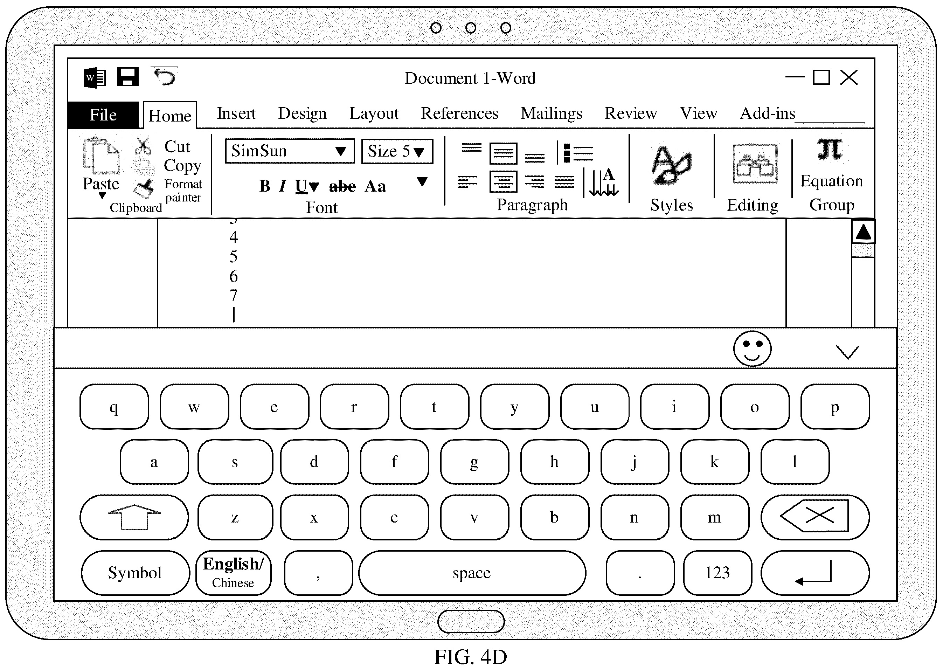

FIG. 4A shows only one possible case in which the virtual keyboard blocks the input area in the input process of the user, and there are usually a plurality of possible cases. For example, as shown in FIG. 4C, the user may also press an enter button before inputting at an end location of a line, and the cursor moves to a beginning location of a next line. For another example, as shown in FIG. 4D, the user may also directly press the enter button at a location in FIG. 2D, and the cursor moves to a beginning location of a next line. It is easy to understand that in any possible case, the electronic device 100 determines, based on the latest location of the cursor, whether the virtual keyboard blocks the input area; and if the virtual keyboard blocks the input area, may automatically slide the content displayed in the interface in the manner of simulated touch sliding, so that the cursor is not blocked by the virtual keyboard.

The following describes a specific procedure of a display method according to embodiments of this application.

**FIG. 5A-1 to FIG. 5A-3** **show an example of a specific procedure of a display method according to an embodiment of this application.**

Refer to FIG. 5A-1 to FIG. 5A-3. The method may be applied to an electronic device 100. A host operating system may be installed on the electronic device 100, and a guest operating system may be loaded on the host operating system. An application of the guest operating system may use a virtual keyboard of the host operating system for a user to perform an input operation. The following describes in detail specific steps of the method.

### Scenario 1: Scenario of entering an input state (step S501 to step S508)

**S501:** The guest operating system detects that the application of the guest operating system enters an input state.

Specifically, the guest operating system may detect whether one or more applications of the guest operating system enter an input state; and if the one or more applications of the guest operating system enter the input state, may perform subsequent steps, to indicate the host operating system to bring up and display a virtual keyboard of the host operating system for the user to perform the input operation.

The application may be an application (for example, an office application, a social application, or a shopping application) that can have a function of editing information such as a text, a picture, or an emoticon.

In this embodiment of this application, an example in which the application is the office application is used.

"The application enters the input state" may mean that an identifier (for example, the cursor 222 and the cursor 221 exemplarily shown in FIG. 2B) indicating to enter the input state is displayed in an interface of the application.

For example, detecting that the application of the guest operating system enters the input state may be detecting that the user opens an edit page of the application and that the cursor 222 and the cursor 221 exemplarily shown in FIG. 2B are displayed on the edit page; or may be detecting that the user performs a specific operation (for example, a click operation on the edit page by using a mouse or a finger) after opening the edit page of the application to trigger displaying of the cursor 222 and the cursor 221 exemplarily shown in FIG. 2B.

**S502:** The guest operating system sends a message 1 to the host operating system, where the message includes indication information for entering the input state and location information 1 of an input focus.

Specifically, after detecting that the application of the guest operating system enters the input state, the guest operating system may obtain location information of a current input focus. The input focus may be displayed as a blinking cursor (for example, the cursor 222 exemplarily shown in FIG. 2B), and the location information of the input focus may be location information of the cursor (namely, information about a display location of the cursor on a display).

Further, after obtaining the location information of the current input focus, the guest operating system may send the message 1 to the host operating system, where the message includes the indication information for entering the input state and the location information 1 of the input focus, and the location information 1 of the input focus is the location information of the current input focus (for example, the location information of the cursor 222 exemplarily shown in FIG. 2B).

The location information of the input focus may be described according to a preset rule. In one possible description, an upper boundary of a screen (namely, the display) is used as a reference boundary, and a distance (unit: pixel) between the upper boundary of the screen and the input focus indicates a height of a location (namely, an input location/edit location) of the input focus. In another possible description, a lower boundary of the screen is used as a reference boundary, and a distance (unit: pixel) between the lower boundary of the screen and the input focus indicates a height of the location of the input focus. It is easy to understand that in this embodiment of this application, the location information of the input focus is used by the host operating system to determine whether the input focus is blocked by the virtual keyboard in subsequent steps. In addition, usually, an input area and the virtual keyboard are in a top-bottom layout, instead of a left-right layout. Therefore, the location information of the input focus may include only a distance of the input focus relative to the upper boundary or the lower boundary of the screen, and does not need to include a distance of the input focus relative to a left boundary or a right boundary of the screen. That is, in this embodiment of this application, the location information of the input focus may be represented by height information of the location of the input focus.

It may be understood that in this embodiment of this application, the boundary of the screen may be determined based on content displayed on the screen, and is definitely determined based on a real hardware boundary of the electronic device. For example, a hardware boundary close to a display location of a status bar on the screen is the upper boundary of the screen, and a hardware boundary close to a display location of a navigation bar on the screen is the lower boundary of the screen.

In some examples, the indication information for entering the input state may include style information, of the mouse cursor (for example, "I"-shaped style information of the cursor 221 exemplarily shown in FIG. 2B), indicating to enter the input state.

It should be noted that in step S502, the guest operating system simultaneously sending the indication information for entering the input state and the location information 1 of the input focus to the host operating system is used as an example. It is easy to understand that the guest operating system may alternatively separately send the indication information for entering the input state and the location information 1 of the input focus to the host operating system. This is not limited in this embodiment of this application.

It may be understood that a communication connection needs to be established between the host operating system and the guest operating system. Based on the communication connection, mutual communication between the host operating system and the guest operating system may be implemented (for example, the guest operating system sends the message 1 to the host operating system). An essence of the communication connection is that communication parties use a commonly recognized mechanism to transmit data. A manner of establishing the connection between the host operating system and the guest operating system is not limited in this embodiment of this application.

**S503:** The host operating system brings up and displays the virtual keyboard of the host operating system based on the indication information for entering the input state.

Specifically, after receiving the indication information, for entering the input state, sent by the guest operating system, the host operating system may bring up the virtual keyboard of the host operating system based on the indication information; and after bringing up the virtual keyboard, may display the virtual keyboard (for example, the virtual keyboard 230 exemplarily shown in FIG. 2C).

It should be noted that the virtual keyboard may be immediately displayed after being brought up in step S503, or may be displayed when subsequent step S504 to step S508 are performed, or may be displayed after step S508 is performed. This is not limited in this embodiment of this application.

**S504:** The host operating system obtains height information of the virtual keyboard.

Specifically, after receiving the message 1 sent by the guest operating system, the host operating system may obtain the height information of the virtual keyboard.

The height information of the virtual keyboard may be described according to a preset rule. Usually, the virtual keyboard is displayed in a lower part of the screen. Therefore, the virtual keyboard starts to block the input area from an upper boundary of the virtual keyboard. For a height of the virtual keyboard, in one possible description, the upper boundary of the screen is used as a reference boundary, and a distance (unit: pixel) between the upper boundary of the screen and the upper boundary of the virtual keyboard indicates the height of the virtual keyboard; or in another possible description, the lower boundary of the screen is used as a reference boundary, and a distance (unit: pixel) between the lower boundary of the screen and the upper boundary of the virtual keyboard indicates the height of the virtual keyboard.

In some examples, the height of the virtual keyboard may be obtained through computing in real time. In this case, the height of the virtual keyboard being computed by the host operating system indicates that the host operating system obtains the height information of the virtual keyboard. In some other examples, the height of the virtual keyboard may be preset. In this case, the host operating system may directly obtain the preset height of the virtual keyboard without computing.

It should be noted that a time sequence of performing step S503 and step S504 is not limited in this embodiment of this application. Step S503 and step S504 may be performed simultaneously, or step S503 may be performed before/after step S504.

**S505:** The host operating system determines, based on the height information of the virtual keyboard and the location information 1 of the input focus, whether the input focus is blocked by the virtual keyboard; and if the input focus is blocked by the virtual keyboard, performs the following step S506.

Specifically, after receiving the location information 1, of the input focus, sent by the guest operating system and obtaining the height information of the virtual keyboard, the host operating system may determine, based on the height information of the virtual keyboard and the location information 1 of the input focus, whether the input focus is blocked by the virtual keyboard. The following may be specifically included.

In a possible implementation, the height of the virtual keyboard and the location of the input focus are both relative to the upper boundary of the screen (that is, the upper boundary of the screen is used as the reference boundary), and the location information 1 of the input focus may include information about a height of the location of the input focus (namely, the distance between the upper boundary of the screen and the input focus). In this case, if the height of the virtual keyboard is less than the height of the location of the input focus, the host operating system may determine that the input focus is blocked by the virtual keyboard; or if the height of the virtual keyboard is greater than or equal to the height of the location of the input focus, the host operating system may determine that the input focus is not blocked by the virtual keyboard.

In another possible implementation, the height of the virtual keyboard and the location of the input focus are both relative to the lower boundary of the screen (that is, the lower boundary of the screen is used as the reference boundary), and the location information 1 of the input focus may include information about a height of the location of the input focus (namely, the distance between the lower boundary of the screen and the input focus). In this case, if the height of the virtual keyboard is greater than the height of the location of the input focus, the host operating system may determine that the input focus is blocked by the virtual keyboard; or if the height of the virtual keyboard is less than or equal to the height of the location of the input focus, the host operating system may determine that the input focus is not blocked by the virtual keyboard.

If the input focus is blocked by the virtual keyboard, the host operating system may perform the following step S506; or if the input focus is not blocked by the virtual keyboard, the host operating system may not perform any operation.

It should be noted that there may be a plurality of manners of "determining whether the input focus is blocked by the virtual keyboard". Determining, based on the height information of the virtual keyboard and the location information of the input focus, whether the input focus is blocked by the virtual keyboard is merely an example manner, and should not constitute a limitation on this application.

**S506:** The host operating system generates a simulated touch sliding sequence 1.

Specifically, after determining that the input focus is blocked by the virtual keyboard, the host operating system may generate the simulated touch sliding sequence, where the simulated touch sliding sequence may be used to simulate touch sliding of the user on the screen. In this way, automatic sliding of displayed content on the screen can be implemented without the user manually performing a touch sliding operation, and the input focus is not blocked by the virtual keyboard through automatic sliding.

That the host operating system generates the simulated touch sliding sequence may be specifically: The host operating system needs to determine a start point value (namely, a height value of a touch start location) and an end point value (namely, a height value of a touch end location) of the simulated touch sliding sequence by combining the height information of the virtual keyboard and the location information of the input focus, where the start point value may be a height value of the location of the input focus, and the end point value may be a height value of the virtual keyboard. To present better sliding effect to the user, one or more values may also be inserted between the start point value and the end point value of the simulated touch sliding sequence. In this way, the start point value, the inserted one or more values, and the end point value form one simulated touch sliding sequence (or referred to as a point sequence of a simulated touch sliding process). The simulated touch sliding sequence may be an arithmetic sequence, and a tolerance of the simulated touch sliding sequence may be specified according to a specific rule. This is not limited in this embodiment of this application.

For example, generating the simulated touch sliding sequence 1 is used as an example. Assuming that the height of the virtual keyboard and the location of the input focus are both relative to the upper boundary of the screen, a case in which the input focus is blocked by the virtual keyboard may be that the height of the virtual keyboard is less than the height of the location of the input focus. With reference to the height of the virtual keyboard and the height of the location of the input focus exemplarily shown in FIG. 5B, assuming that the height of the virtual keyboard is 600 pixels, and the height of the location of the input focus is 800 pixels, the start point value of the simulated touch sliding sequence 1 is 800, and the end point value is 600. Assuming that the tolerance of the simulated touch sliding sequence is 10, the simulated touch sliding sequence 1 may be [800 790 780 770 ... 630 620 610 600].

In some examples, to ensure accurate sliding to a touch end location (or referred to as a target location, namely, a location at which the input focus is not blocked by the virtual keyboard), some more sliding update events may be added to the touch end location. Adding some more sliding update events may be specifically adding N (where N is a positive integer) values after the end point value of the simulated touch sliding sequence, and the N values may be the same as the end point value. For example, if five values are added to the simulated touch sliding sequence 1, the simulated touch sliding sequence 1 may be [800 790 780 770 ... 630 620 610 600 600 600 600 600 600].

It can be learned that the touch end location is a location at which the input focus is just not blocked by the virtual keyboard. In some examples, the touch end location may alternatively be a location at which the input focus is still a specific distance away from being blocked by the virtual keyboard. For example, the height value of the touch end location is set to 600, and the input focus is just not blocked by the virtual keyboard. Assuming that the height value of the touch end location is set to a value less than 600, the touch end location corresponding to the value less than 600 needs to be reached by sliding upward for a specific distance. At the touch end location, the input focus is still a specific distance away from being blocked by the virtual keyboard. A specific height value of the touch end location is not limited in this embodiment of this application, provided that it can be ensured that the input focus is not blocked by the virtual keyboard.

**S507:** The host operating system sends a message 2 to the guest operating system, where the message includes the simulated touch sliding sequence 1.

Specifically, after generating the simulated touch sliding sequence 1, the host operating system may send the message 2 to the guest operating system, where the message includes the simulated touch sliding sequence 1, and the message may indicate the guest operating system to automatically slide content displayed in an interface based on the simulated touch sliding sequence 1, so that the input focus is not blocked by the virtual keyboard.

**S508:** The guest operating system slides, based on the simulated touch sliding sequence 1, content displayed in an interface 1 of the application, so that the input focus slides to a target location 1, where the target location 1 is a location at which the input focus is not blocked by the virtual keyboard.

For example, the interface 1 may be the interface corresponding to the foregoing document 1. That the guest operating system slides, based on the simulated touch sliding sequence 1, the content displayed in the interface 1 of the application may be that the guest operating system slides, as a whole, the content (for example, the content "1234567") edited by the user in the document 1 shown in FIG. 2B and the cursor 222 from the location shown in FIG. 2B to the location shown in FIG. 2D.

The target location 1 may be a location (for example, the location shown in FIG. 2D) at which the input focus is just not blocked by the virtual keyboard, or may be a location at which the input focus is still a specific distance away from being blocked by the virtual keyboard (for example, a corresponding location after moving upward for a specific distance from the location shown in FIG. 2D). This is not limited in this embodiment of this application.

The foregoing scenario 1 describes a specific process of determining whether the virtual keyboard blocks the input area and resolving the problem of the virtual keyboard blocking the input area when the application enters the input state, which is not limited thereto. In the input process of the user, it may also be determined whether the virtual keyboard blocks the input area and resolve the problem of the virtual keyboard blocking the input area. The following describes in detail with reference to steps in the following scenario 2.

### Scenario 2: Input scenario (step S509 to step S517)

**S509:** The host operating system detects the input operation performed by the user by using the virtual keyboard.

The input operation may be an operation (for example, a click operation) of the user on a specific virtual button (for example, the virtual button "a" exemplarily shown in FIG. 3A) on the virtual keyboard.

**S510:** The host operating system obtains an input object generated by using the input operation 1.

After the user performs the operation on the specific virtual button on the virtual keyboard, the input object may be a text, a picture, an emoticon, or the like corresponding to the virtual button. For example, if the virtual button operated by the user is the virtual button "a" exemplarily shown in FIG. 3A, the input object may be the character "a".

In some examples, after obtaining the input object, the host operating system may further match a candidate object associated with the input object, for example, a candidate text such as "and" or "are", exemplarily shown in FIG. 3B, that is associated with the character "a".

**S511:** The host operating system sends a message 3 to the guest operating system, where the message includes the input object.

**S512:** The guest operating system inserts and displays the input object by using the location of the input focus as a start point.

For example, that the guest operating system inserts and displays the input object by using the location of the input focus as the start point may be that the guest operating system inserts the character "a" by using the location of the cursor exemplarily shown in FIG. 3A as the start point, and displays the character "a" in FIG. 3C.

In some examples, because the electronic device 100 may display, on the virtual keyboard, an option corresponding to the input object and an option corresponding to the candidate object associated with the input object (for example, refer to FIG. 3B), before step S511 is performed, the method further includes: The host operating system detects an operation (for example, a click operation) of the user on the option corresponding to the input object, that is, in response to the operation, the host operating system sends the input object to the guest operating system. It is easy to understand that if the host operating system detects an operation of the user on an option corresponding to a specific candidate object associated with the input object, in response to the operation, the host operating system may send the candidate object to the guest operating system, and the guest operating system may insert and display the candidate object by using the location of the input focus as the start point.

**S513:** The guest operating system sends a message 4 to the host operating system, where the message includes location information 2 of the input focus.

Specifically, after the guest operating system inserts and displays the input object by using the target location 1 as the start point, the location of the input focus also changes once accordingly. To avoid the problem of the virtual keyboard blocking the input area again, the guest operating system may send the message 4 to the host operating system, where the message includes the location information 2 of the input focus, and the location information 2 of the input focus is information about the location of the input focus (for example, the location of the cursor exemplarily shown in FIG. 3C) after the input object is input.

In this embodiment of this application, in the entire input process of the user, because each time the guest operating system inserts the input object, and the location of the input focus changes once. Therefore, the foregoing step S513 is performed once each time the location of the input focus changes. In this way, the guest operating system may send latest location information of the input focus to the host operating system in real time, so that the host operating system can determine in real time whether the virtual keyboard blocks the input focus (for example, the following step S514). If the virtual keyboard blocks the input focus, the host operating system continues to generate a new simulated touch sliding sequence (for example, the following step S515), and sends the simulated touch sliding sequence to the guest operating system (for example, the following step S516), so that the guest operating system can continue to slide, based on the simulated touch sliding sequence, the content displayed in the interface 1 of the application, and the input focus is not blocked by the virtual keyboard (for example, the following step S517).

**S514:** The host operating system determines, based on the height information of the virtual keyboard and the location information 2 of the input focus, whether the input focus is blocked by the virtual keyboard; and if the input focus is blocked by the virtual keyboard, performs the following step S515.

Step S514 is similar to step S505. For a specific execution process of step S514, refer to the text descriptions of step S505. Details are not described herein again.

In some examples, the host operating system may store the height information of the virtual keyboard obtained in step S504. In this way, step S514 may be directly performed. If the height information is not stored, the height information of the virtual keyboard needs to be obtained before step S514 is performed.

**S515:** The host operating system generates a simulated touch sliding sequence 2.

Step S515 is similar to step S506. For a specific execution process of step S515, refer to the text descriptions of step S506. Details are not described herein again.

**S516:** The host operating system sends a message 5 to the guest operating system, where the message includes the simulated touch sliding sequence 2.

Step S516 is similar to step S507. For a specific execution process of step S516, refer to the text descriptions of step S507. Details are not described herein again.

**S517:** The guest operating system slides, based on the simulated touch sliding sequence 2, the content displayed in the interface 1 of the application, so that the input focus slides to a target location 2, where the target location 2 is a location at which the input focus is not blocked by the virtual keyboard.

For example, the target location 2 may be a location (for example, the location shown in FIG. 4B/FIG. 4C) at which the input focus is just not blocked by the virtual keyboard, or may be a location at which the input focus is still a specific distance away from being blocked by the virtual keyboard (for example, a corresponding location after moving upward for a specific distance from the location shown in FIG. 4B/FIG. 4C). This is not limited in this embodiment of this application.

### Scenario 3: Scenario of exiting the input state (step S518 to step S520)

**S518:** The guest operating system detects that the application of the guest operating system exits the input state.

Exiting the input state may mean that the application is closed, or the application is not closed but does not display the input focus (for example, does not display the cursor 222 exemplarily shown in FIG. 2B), or the application is not closed but displays an identifier indicating to exit the input state (for example, displays the cursor 217 with the arrow style exemplarily shown in FIG. 2A).

**S519:** The guest operating system sends a message 6 to the host operating system, where the message includes indication information for exiting the input state.

In some examples, the indication information for exiting the input state may include style information, of the mouse cursor (for example, arrow style information of the cursor 217 exemplarily shown in FIG. 2A), indicating to exit the input state.

**S520:** The host operating system closes and cancels displaying of the virtual keyboard based on the indication information for exiting the input state.

Specifically, after receiving the indication information, for exiting the input state, sent by the guest operating system, the host operating system may close the virtual keyboard based on the indication information, and cancel displaying of the virtual keyboard.

With the method provided in the embodiment shown in FIG. 5A-1 to FIG. 5A-3 implemented, when the virtual keyboard is brought up, the electronic device 100 may determine whether the input focus is blocked by the virtual keyboard; and if the input focus is blocked by the virtual keyboard, may automatically move (for example, move upward) the edited content and the input focus in the interface in a direction away from the virtual keyboard, so that the edited content of the user and the input focus are visible and are not blocked by the virtual keyboard. Because in a process of performing the input operation by the user by using the virtual keyboard, an edit location (namely, the location of the input focus) moves (for example, moves downward) with inputting of the user, the electronic device 100 may continue to determine whether the input focus is blocked by the virtual keyboard; and if the input focus is blocked by the virtual keyboard, may continue to automatically move (for example, move upward) the edited content and the input focus in the interface in the direction away from the virtual keyboard, so that the edited content of the user and the input focus are visible. In this way, the problem of the virtual keyboard blocking the input area can be effectively resolved, thereby ensuring that the input focus is not blocked in the process of performing the input operation by the user by using the virtual keyboard, and improving user experience.

It should be noted that the display method provided in this embodiment of this application is not only applicable to the ecological integration cross-system application scenario shown in the embodiment shown in FIG. 5A-1 to FIG. 5A-3, but also applicable to the single-system application scenario. It is easy to understand that a specific process of implementing the display method provided in this embodiment of this application in the single-system application scenario is similar to that in the foregoing ecological integration cross-system application scenario. A difference is that all steps are performed by a single system, and an interaction step between two systems is omitted. For example, in the single-system application scenario, in the steps in the embodiment shown in FIG. 5A-1 to FIG. 5A-3, the cross-system interaction steps: step S502, step S507, step S511, step S513, step S516, and step S519, do not need to be performed, and other steps are all performed by the single system.

The following describes a software structure of the electronic device 100 according to embodiments of this application.

**FIG. 6** **shows an example of a software structure of an electronic device 100 according to an embodiment of this application.**

As shown in FIG. 6, the software system of the electronic device 100 may use a layered architecture, an event-driven architecture, a microkernel architecture, a micro service architecture, or a cloud architecture. In this embodiment of this application, an example in which a host operating system uses a layered architecture is used, to describe the software structure of the electronic device 100, and should not constitute a limitation on the host operating system in this application.

In the layered architecture, software is divided into several layers, and each layer has a clear role and task. The layers communicate with each other through a software interface. In some examples, the host operating system may be divided into four layers: an application layer, an application framework layer, a system service layer, and a kernel layer from top to bottom.

The application layer may include a series of application packages.

As shown in FIG. 6, the application package may include applications such as Camera, Gallery, Calendar, Call, WLAN, Bluetooth, and Proxy.

The proxy application may be configured to interact with an input method framework module to implement functions such as bringing up or closing of a virtual keyboard and input control; may be further configured to receive a message (for example, indication information for entering an input state and location information of an input focus) sent by a guest operating system; may be further configured to send, to the guest operating system, information input by a user; may be further configured to obtain height information of the virtual keyboard; may be further configured to determine whether the virtual keyboard blocks an input area; may be further configured to compute a simulated touch sliding sequence, and send the simulated touch sliding sequence to the guest operating system; and so on.

The proxy application may include one or more modules, and the one or more modules may be configured to implement the foregoing plurality of functions of the proxy application. For example, the proxy application may include an interaction and input module and a computing module.

The interaction and input module may be configured to interact with the input method framework module, may be further configured to receive the message sent by the guest operating system, may be further configured to send, to the guest operating system, the information input by the user, and so on. An invisible input box/edit box (EditText) may be set in the interaction and input module, and is configured to receive a user input. Information such as a text, a picture, or an emoticon input by the user may be stored in the input box, and the information may be sent to the guest operating system. For example, after receiving the indication information, for entering the input state, sent by the guest operating system, the proxy application may focus on the input box to receive the user input.

The computing module may be configured to obtain the height information of the virtual keyboard; may be further configured to obtain the location information of the input focus (for example, may obtain the location information of the input focus from the interaction and input module); may be further configured to determine whether the virtual keyboard blocks the input area; may be further configured to compute the simulated touch sliding sequence, and send the simulated touch sliding sequence to the guest operating system; and so on.

The software structure of the electronic device 100 may further include one or more input method applications (not shown in the figure), for example, a Baidu^{®} input method or a Sogou^{®} input method. This is not limited in this embodiment of this application. The input method application may support a plurality of types of virtual keyboards, for example, a T9-style Pinyin keyboard, a full QWERTY-style Pinyin keyboard, an English keyboard, a numeric keypad, or an emoticon keyboard. This is not limited in this embodiment of this application.

As shown in FIG. 6, the application framework layer may include a window manager, a content provider, a view system, a resource manager, a notification manager, the input method framework module, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, a phone book, and the like.

The view system includes visual controls such as a control for displaying a text and a control for displaying a picture. The view system may be configured to construct an application. A display interface may include one or more views. For example, a display interface including a messaging notification icon may include a view for displaying a text and a view for displaying a picture.

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of a system in a form of a graph or a scroll bar text, for example, a notification of an application that is run on a background, or may be a notification that appears on a screen in a form of a dialog window. For example, text information is prompted in the status bar, an alert tone is made, an electronic device vibrates, or an indicator blinks.

The input method framework module may be configured to receive indication information sent by the proxy application, and bring up/close the virtual keyboard based on the indication information; and may be further configured to send, to the proxy application, information input by the user, where the information input by the user may be an input object (for example, a text, a picture, or an emoticon) that is generated by using an input operation and that is obtained by the input method framework module based on the input operation of the user.

The system service layer may include a plurality of functional modules, for example, a surface manager (Surface Manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, a Bluetooth driver, and a sensor driver.

The following describes another software structure of the electronic device 100 according to embodiments of this application.

**FIG. 7** **shows an example of another software structure of an electronic device 100 according to an embodiment of this application.**

As shown in FIG. 7, the software structure of the electronic device 100 may be a structure of a guest operating system. It is easy to understand that FIG. 7 is merely a diagram of the structure of the guest operating system in this application, and should not constitute a limitation on the guest operating system in this application.

The guest operating system may include one or more applications, for example, an office application, a chat application, and a shopping application.

The office application is an application that has a function of editing information such as a text, a picture, or an emoticon, and may implement a plurality of functions, for example, a text, a table, a presentation, or PDF reading, that are most commonly used by the office application.

In this embodiment of this application, the office application may interact with an input method framework module, to implement an input function and a function of automatically sliding input content and an input focus.

In this embodiment of this application, the office application is used as an example to describe the display method provided in embodiments of this application, and is not limited thereto. The display method provided in embodiments of this application is also applicable to another application. This is not limited in embodiments of this application.

The guest operating system may further include one or more input method applications (not shown in the figure).

The display method provided in embodiments of this application may be performed when the guest operating system needs to implement an input function by using a virtual keyboard on a host operating system side. In a specific condition, the guest operating system needs to implement the input function by using the virtual keyboard on the host operating system side. The specific condition may include but is not limited to the following two possibilities: One possibility is that the input method application of the guest operating system cannot support the virtual keyboard; and the other possibility is that the user autonomously sets and uses the virtual keyboard on the host operating system side to implement the input function on the guest operating system side.

The guest operating system may include a window manager (WindowManager), a resource manager, an input method framework module, a media library, a display framework (DisplayFramework) module, and the like.

The window manager is configured to manage a window program. The window manager may obtain a size of a display, determine whether there is a status bar, perform screen locking, take a screenshot, and the like.

The resource manager provides various resources such as a localized character string, an icon, a picture, a layout file, and a video file for an application.

The input method framework module may be configured to obtain whether the application (for example, the office application) enters an input state; may be further configured to obtain location information of an input focus; may be further configured to interact with the host operating system, for example, send indication information indicating whether the application enters the input state, the location information of the input focus, and the like to the host operating system; and for another example, receive a message (for example, a simulated touch sliding sequence, or information input by the user) sent by the host operating system; may be further configured to indicate the application that enters the input state to automatically slide input content and the input focus based on the simulated touch sliding sequence, so that the input focus is not blocked by the virtual keyboard; may be further configured to send the information input by the user to the application that enters the input state, to complete information inputting; and so on.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The display framework module may be configured to execute a service related to a display function.

**Based on the software structures in** **FIG. 6** **and** **FIG. 7****, the following describes, exemplarily shown in** **FIG. 8****, a possible collaboration manner between modules when the display method provided in embodiments of this application is implemented by the electronic device 100 when the host operating system is installed and the guest operating system is loaded on the host operating system.**

One communication channel may be established between the host operating system and the guest operating system, and the communication channel may be used for information exchange between the host operating system and the guest operating system.

For example, the office application of the guest operating system uses the virtual keyboard of the host operating system for the user to perform the input operation. Similar to FIG. 5A-1 to FIG. 5A-3, there are the following three scenarios:

### Scenario 1: Scenario of entering the input state

The input method framework module of the guest operating system may obtain whether the office application enters the input state; and if the office application enters the input state, obtain the location information of the input focus, and send, to the proxy application of the host operating system through the communication channel, the indication information for entering the input state and the location information of the input focus. The proxy application may indicate, based on the indication information for entering the input state, the input method framework module of the host operating system to bring up the virtual keyboard; and further, may obtain the height information of the virtual keyboard, and determine, based on the height information of the virtual keyboard and the location information of the input focus, whether the virtual keyboard blocks the input area. If the virtual keyboard blocks the input area, the proxy application may generate the simulated touch sliding sequence, and send a simulated touch sliding notification message to the input method framework module of the guest operating system through the communication channel, where the message includes the simulated touch sliding sequence. The input method framework module of the guest operating system may indicate, based on the message, the office application to automatically slide the input content and the input focus based on the simulated touch sliding sequence, so that the input focus is not blocked by the virtual keyboard.

### Scenario 2: Input scenario

After the input method framework module of the host operating system brings up the virtual keyboard, the virtual keyboard may be displayed on the screen of the electronic device 100. The user may perform the input operation by using the virtual keyboard to generate the information input by the user. The input method framework module of the host operating system may send, to the proxy application, the information input by the user. The proxy application may send, to the input method framework module of the guest operating system through the communication channel, the information input by the user. Then, the input method framework module of the guest operating system may send, to the office application, the information input by the user, to complete information inputting. In the input process of the user, the location of the input focus changes with user inputting. Therefore, the input method framework module of the guest operating system may continuously obtain latest location information of the input focus with the user inputting, and send the latest location information to the proxy application of the host operating system through the communication channel. The proxy application may continue to determine, based on the latest location information of the input focus and the height information of the virtual keyboard, whether the virtual keyboard blocks the input area; and if the virtual keyboard blocks the input area, perform the process similar to that in the foregoing scenario 1, so that the input focus is not blocked by the virtual keyboard.

### Scenario 3: Scenario of exiting the input state

The input method framework module of the guest operating system may obtain whether the office application exits the input state; and if the office application exits the input state, may send, to the proxy application of the host operating system through the communication channel, the indication information for exiting the input state. The proxy application may indicate, based on the indication information for exiting the input state, the input method framework module of the host operating system to close the virtual keyboard. After the virtual keyboard is closed, displaying of the virtual keyboard may be canceled on the screen of the electronic device 100.

The following describes a structure of the electronic device 100 according to embodiments of this application.

**FIG. 9** **shows an example of a structure of an electronic device 100 according to an embodiment of this application.**

As shown in FIG. 9, the electronic device 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that have/has been used or are/is cyclically used by the processor 110. If the processor 110 needs to use the instructions or the data again, the processor may directly invoke the instructions or the data from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to be connected to a charger to charge the electronic device 100, or may be configured to transmit data between the electronic device 100 and a peripheral device, or may be configured to be connected to a headset for playing audio through a headset. Alternatively, the interface may be configured to be connected to another terminal device, for example, an AR device.

It may be understood that an interface connection relationship between modules illustrated in embodiments of this application is merely an illustrative description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device 100 through the power management module 141.

The power management module 141 is configured to be connected to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits, to the baseband processor for processing, the low-frequency baseband signal obtained through demodulation. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computing, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

In embodiments of this application, the display 194 may be configured to display a virtual keyboard, an interface of an application opened by a user, information input by the user, a cursor, and the like.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and quickly processes input information with reference to a structure of a biological neural network, for example, a transfer mode between human brain neurons, and may further continuously perform self-learning. Applications such as intelligent cognition of the electronic device 100 may be implemented through the NPU, for example, image recognition, facial recognition, voice recognition, and text understanding.

The interface for external memory 120 may be configured to be connected to an external storage card, for example, a micro SD card, to extend a storage capability of the electronic device 100. The external storage card communicates with the processor 110 through the interface for external memory 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example, audio data or a phone book) and the like created in a process of using the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to be connected to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also compute a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a messaging application icon, an instruction for viewing an SMS message is performed. When a touch operation whose touch operation intensity is greater than or equal to the first pressure threshold is performed on the messaging application icon, an instruction for creating a new SMS message is performed.

The touch sensor 180K is also referred to as a touch panel. The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K (for example, a click operation of a user on a virtual button on a virtual keyboard, or a touch operation performed when the user triggers displaying of a cursor). The touch sensor may transfer the detected touch operation to the application processor, to determine a type of a touch event. A visual output related to the touch operation may be provided through the display 194. In some other embodiments, the touch sensor 180K may also be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to be connected to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

It should be understood that the electronic device 100 shown in FIG. 9 is merely an example, and the electronic device 100 may have more or fewer components than those shown in FIG. 9, may combine two or more components, or may have different component configurations. The components shown in FIG. 9 may be implemented in hardware including one or more signal processing and/or application-specific integrated circuits, software, or a combination of hardware and software.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Persons of ordinary skill in the art may understand that all or some of the procedures of the methods in embodiments may be implemented by a computer program instructing relevant hardware. The program may be stored in a computer-readable storage medium. When the program is run, the procedures of the methods in embodiments are performed. The foregoing storage medium includes any medium that can store program code, such as a ROM, a random access memory RAM, a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments, or make equivalent replacements to some technical features thereof, without departing from the scope of the technical solutions of embodiments of this application.

## Claims

1. A display method, applied to an electronic device comprising a display, wherein a first operating system and a second operating system run on the electronic device, and the method comprises:
displaying, by the electronic device, an edit page of a first application, wherein the first application is run on the first operating system;
receiving, by the electronic device, an input operation of a user on the edit page;
displaying, by the electronic device, a virtual keyboard, wherein the virtual keyboard is provided by the second operating system; and
sliding, by the electronic device, the edit page until an input focus corresponding to the input operation is not blocked by the virtual keyboard.

2. The method according to claim 1, wherein a display area of the virtual keyboard on the display is a first area, and a display location of the input focus on the display before the sliding falls within the first area.

3. The method according to claim 1 or 2, wherein a condition for performing the sliding comprises:
the edit page is not in a state of being browsed by the user by sliding, and the browsing by sliding means that the user slides the edit page to browse content before or after the input focus.

4. The method according to any one of claims 1 to 3, wherein displaying, by the electronic device, the virtual keyboard specifically comprises:
sending, by the first operating system, a first message to the second operating system based on the input operation; and
displaying, by the second operating system, the virtual keyboard based on the first message.

5. The method according to any one of claims 1 to 4, wherein the sliding, by the electronic device, the edit page until the input focus corresponding to the input operation is not blocked by the virtual keyboard specifically comprises:
receiving, by the second operating system, information that is about a first location and that is sent by the first operating system, wherein the first location is the display location of the input focus on the display before the sliding;
determining, by the second operating system, whether the first location falls within the display area of the virtual keyboard on the display; and if the first location falls within the display area of the virtual keyboard on the display, sending, by the second operating system, a second message to the first operating system; and
sliding, by the first operating system, the edit page based on the second message until the input focus corresponding to the input operation is not blocked by the virtual keyboard.

6. The method according to claim 5, wherein the second message comprises a value sequence, and the value sequence is used by the electronic device to slide the edit page until the input focus corresponding to the input operation is not blocked by the virtual keyboard.

7. The method according to claim 6, wherein the value sequence sequentially comprises at least a first value and a second value, the first value is a distance value between the input focus and a reference boundary of the display before the sliding, and the second value is a distance value between an upper boundary of the virtual keyboard and the reference boundary of the display.

8. The method according to claim 7, wherein the value sequence further comprises one or more values between the first value and the second value, and the value sequence is an arithmetic sequence; and/or the reference boundary of the display is an upper boundary of the display; and/or the value sequence further comprises one or more values that are the same as the second value after the second value.

9. The method according to any one of claims 1 to 8, wherein the method further comprises:
detecting, by the second operating system, a first operation of the user on the virtual keyboard;
obtaining, by the second operating system, an input object generated by using the first operation, and sending a third message to the first operating system, wherein the third message comprises the input object; and
displaying, by the first operating system, the input object based on the third message.

10. The method according to any one of claims 1 to 9, wherein the method further comprises:
detecting, by the first operating system, a second operation of the user;
sending, by the first operating system, a fourth message to the second operating system in response to the second operation; and
canceling, by the second operating system displaying of the virtual keyboard based on the fourth message.

11. An electronic device, wherein the electronic device comprises one or more processors and one or more memories, the one or more memories are coupled to the one or more processors, the one or more memories are configured to store computer program code, and the computer program code comprises computer instructions; and when the one or more processors execute the computer instructions, the electronic device is enabled to perform the method according to any one of claims 1 to 10.

12. A computer storage medium, wherein the computer storage medium stores a computer program, and the computer program comprises program instructions; and when the program instructions are run on an electronic device, the electronic device is enabled to perform the method according to any one of claims 1 to 10.
